# EUROPEAN PATENT SPECIFICATION

(11) **EP 3 743 464 B1**
(45) Date of publication and mention of the grant of the patent: **06.03.2024**
(21) Application number: 18902374.0
(22) Date of filing: 23.01.2018
(51) Int. Cl.: C08J 9/236, C08J 3/075, C08L 1/02, C08L 97/02, C08K 3/36, C08J 3/20, C08L 3/04, C08L 79/02, C08L 77/00, C08J 9/00, C08J 9/28, C08J 9/36

(54) **ORGANIC-INORGANIC AEROGEL COMPOSITES, METHODS AND USES THEREOF**
ORGANISCH-ANORGANISCHE AEROGELVERBUNDSTOFFE, VERFAHREN UND VERWENDUNGEN DAVON
COMPOSITES D'AÉROGELS ORGANIQUES-INORGANIQUES, PROCÉDÉS ET UTILISATIONS ASSOCIÉS

(43) Date of publication of application: 02.12.2020
(73) Proprietor: Bronx Creative&Design Centre Pte Ltd, Singapore 534119 (SG)
(72) Inventor: NGUYEN, Son T., Ho Chi Minh City (VN); NG, Whye Tho, Singapore 534119 (SG)
(74) Representative: Viering, Jentschura & Partner mbB Patent- und Rechtsanwälte
(86) International application number: PCT/SG2018/050042
(87) International publication number: WO 2019/147183

(56) References cited:
- WO-A1-2016/121372
- CN-A- 104 326 484
- US-A1- 2007 259 979
- US-A1- 2007 276 051
- US-A1- 2008 287 561
- US-A1- 2014 134 415
- US-A1- 2017 081 495
- US-A1- 2018 009 969
- Demilecamps Arnaud: "Synthesis and characterization of polysaccharide-silica composite aerogels for thermal superinsulation", , 7 July 2015 (2015-07-07), XP055861271, Retrieved from the Internet: URL:https://pastel.archives-ouvertes.fr/te l-01279456 [retrieved on 2021-11-15]
- Green Earth Aerogel: "Green earth aerogels", , 31 December 2015 (2015-12-31), XP055861783, Retrieved from the Internet: URL:http://www.green-earth-aerogel.com/ [retrieved on 2021-11-16]

## Description

### Field

The present disclosure relates to methods of synthesizing organic-inorganic aerogel composites. The present disclosure also relates to organic-inorganic aerogel composites and their uses thereof.

### Background

Greenhouse effect has been warming up the earth and threatening human life. It was found that CO₂ emission from buildings contributed more than 30% of greenhouse gas emission in developed countries. Buildings also accounted for 39% of energy consumption. To tackle this problem, it is envisioned that improving thermal insulation of buildings will be one of the more effective solutions to this issue. In this regard, several materials have been used as thermal building insulation materials, e.g. mineral wool, polystyrene, polyurethane foam, cellulose, fibreglass, etc. However, one drawback is that to achieve better thermal insulation with these insulation materials, thicker walls will be needed. The disadvantage is that this will increase the building cost, reduce usable floor area, and impose architectural restrictions. Additionally, materials such as polystyrene and polyurethane foam are flammable and are not environmentally friendly. Therefore, there have been many efforts in developing more effective insulation materials.

Noise is another undesirable hazard, which can have severe impact on human beings. The rapid industrialization and increasing automobiles on the road are the major factors for environmental noise pollution. Therefore, sound insulation materials are used to soundproof buildings and other infrastructure to enhance the quality of life. This can be achieved by using soundproofing materials such as mineral wool, heavy curtains or foam as part of wall and ceiling claddings for sound absorption. The current array of these materials can be harmful for human health. For instance, mineral wool fibers can lead to lung diseases. Further, these materials may destroy the aesthetics of the interior design. As a result, exploring sustainable sound insulation materials is needed.

Aerogel is a class of nano-porous solids with complex interconnectivity and branched structure of several nanometers. It can come in a variety of forms, colors and shapes from monolithic to powders. Aerogels have very little solid component and is almost made up of 99.8% of air which gives the product a translucent appearance. Aerogels are often synthesized via sol-gel technique when the liquid in a gel is removed above its critical temperature and pressure and replaced with air, thus forming a skeletal solid (i.e. networked structure). At the critical parameters, there is no liquid-vapor phase, and thus no surface tension present on the gel. This allows the gel matrix to remain intact without large shrinkage.

Aerogels, being porous, are highly interconnected and lightweight. Aerogels are formed by replacing the liquid in a gel by air. Due to the large specific surface area, high porosity, and low density, many aerogels display one or more of low thermal conductivity and good acoustic insulation property.

However, many aerogels perform only specific function, for example, either as a thermal insulation material or as an acoustic material. For example, Demilecamps Arnaud: "Synthesis and characterization of polysaccharide-silica composite aerogels for thermal superinsulation", 7 July 2015, describes fabrication of a polysaccharide-silica composite aerogel, which was evaluated for its thermal insulation properties. Further, many aerogels have properties which are only similar to standard materials currently used in building applications such as glass wool, plaster board panelling, etc. For example, the thermal conductivity of many silica aerogels are about 0.020 W/(m K), which is comparable to that of superior class polyurethane foam.

Another problem with using most aerogels in these applications is that they are often characterised by poor mechanical properties. For example, most silica aerogels are very fragile and pressing on the aerogel will cause a catastrophic breakdown in the sparse structure, causing it to shatter like glass.

Another limitation that hinders the use of most aerogels in these applications is its manufacturing cost. For example, many aerogels may cost above USD 20 per square metre, compared to glass wool which costs about USD 3.50 per square metre. The high cost of an aerogel is often a result of the multiple processing steps required to make the product and the cost of the raw materials.

To overcome some of these problems, different types of aerogels have been synthesized. For example, to improve its mechanical properties, post gelation washing and cross linking with polyurea has been performed to create x-aerogels. Fiber reinforced aerogels (for example with polyester, glass, ceramic fiber, etc) have also been introduced for use as thermal insulation materials. Also, some organic aerogels are less friable and less fragile than silica aerogels.

However, these aerogels are limited in their applications as they are synthesized with the view to overcome only a particular issue. It is desirable to have one material which can perform multiple functionalities for different applications and uses at the same time.

Further, such modifications to the base aerogel also introduce additional synthesis steps, which further increases its manufacture cost and time. This is not ideal in a commercial setting.

It is generally desirable to overcome or ameliorate at least one of the above mentioned problems. Accordingly, there is a need to improve the mechanical and functional properties of aerogels.

### Summary

In accordance with the present disclosure, in one aspect, there is provided a method of fabricating an organic-inorganic aerogel composite, comprising the steps of:
a) providing a cellulose component, derived from a plant based material, dispersed in an aqueous medium, wherein the plant based material is rice straw grounded into powder, which is subjected to a treatment with NaOH and H₂O₂;
b) adding a water soluble binder and a water soluble polymer to the aqueous medium to form a first mixture, wherein the water soluble polymer is a cationic starch and the water soluble binder is polyvinyl alcohol;
c) forming a silica component, which is derived from a plant based silicate material, *in situ* when contacted with the first mixture for a predetermined time and condition to form a second mixture, wherein the silica component is rice husk ash, which is subjected to a treatment with NaOH, and the predetermined time is 5 min to 60 min, and the predetermined condition is a temperature of 15 °C to 100 °C;
d) gelling the second mixture; and
e) drying the second mixture to form an organic-inorganic aerogel.

It would be understood that the step of forming a silica component comprises converting the plant based silicate material to the silica component.

In embodiments of aforesaid aspect, the predetermined condition is a pH of 6.5 to 7.5.

In embodiments of aforesaid aspect, the cellulose component has an aspect ratio of 50 to 100.

In embodiments of aforesaid aspect, forming the silica component comprises forming silica particle.

In embodiments of aforesaid aspect, the silica particle is adhered to the cellulose component.

In embodiments of aforesaid aspect, the cellulose component is 60% to 75% of the final composite weight.

### Brief Description of the Drawings

Preferred embodiments of the disclosure are hereafter described, by way of non-limiting example only, with reference to the accompanying drawings, in which:
**Figure 1** illustrates an example of a fabrication method for inorganic aerogel using freeze drying (Comparative Example 1A).
**Figure 2** illustrates an example of a fabrication method for inorganic aerogel using CO₂ super-critical drying (Comparative Example 1B)
**Figure 3** illustrates an example of a fabrication method for organic aerogel using freeze drying (Comparative Example 2A).
**Figure 4** illustrates an example of a fabrication method for organic aerogel using CO₂ super-critical drying (Comparative Example 2B).
**Figure 5** illustrates examples of a) comparative example 1 and b) comparative example 2.
**Figure 6** illustrates an example of a fabrication method for organic-inorganic aerogel composite using freeze drying.
**Figure 7** illustrates an example of a fabrication method for organic-inorganic aerogel using CO₂ super critical drying.
**Figure 8** illustrates an example of a) samples of organic-inorganic aerogel composites and b) a sample of organic-inorganic aerogel evaluated for its hydrophobic quality.

### Detailed Description

Unless defined otherwise, all technical and scientific terms used herein have the same meaning as commonly understood by those of ordinary skill in the art. Although any methods and materials similar or equivalent to those described herein can be used in the practice or testing of the present disclosure, preferred methods and materials are described. For the purposes of the present disclosure, the following terms are defined below.

As used herein, the term 'aerogel' has the common meaning as would be understood by the person skilled in the art. Aerogel refers to a porous ultralight material which is derived from a gel, in which the liquid component in the gel has been replaced with a gas or air. Aerogels are usually produced by extracting the liquid component of the gel through supercritical drying. This allows the liquid to be removed without causing the solid matrix to collapse from capillary action. As a result, aerogels have a porous solid matrix network that contains gas or air pockets, with the gas or air pockets taking up majority of space within the aerogel. More than 90% of the volume of aerogel is gas or air. Preferably, more than 95% of the volume of the aerogel is gas or air. Even more preferably, more than 98% of the volume of the aerogel is gas or air.

As used herein, "cellulose-silica aerogel" or "organic-inorganic aerogel" or "hybrid aerogel" refers to an aerogel which has both cellulose and silica as base components of the aerogel. "Cellulose" as used herein, refers to a polymer made of repeating glucose molecules attached end to end, and can be of any size and dimension. Cellulose is a linear polysaccharide comprising β(1-4)-D-glucopyranose units in ⁴C₁ conformation. The conformation of β-linked glucopyranose residues stabilizes the chair structure. Cellulose is an insoluble polymer in water and may exist in four crystalline forms: I_{α}, I_{β}, II and III. As used herein, the term "cellulose" also encompasses within its scope natural cellulose fibers and manufactured cellulose fibers. In the simplest form, silica is an oxide of silicon, and silica aerogel is an aerogel which comprises of silicon-oxygen bond (siloxane bridges) as the basis of its framework. Each silicon atom can form 4 bonds, of which all 4 bonds are siloxane bridges, 3 bonds are siloxane bridges, 2 bonds are siloxane bridges, 1 bond is siloxane bridge, or none of the bonds are siloxane bridges.

The term "organic-inorganic aerogel composite" refers to a cellulose-silica aerogel which in addition to the cellulose-silica framework, comprises at least another part, element, substance, salt, molecule or compound. In the context of the present disclosure, the organic-inorganic aerogel composite further comprises at least a water soluble binder. Such elements can be either of an organic or inorganic nature, can interact in a physical or chemical manner, or not interact with the silica framework. Organic-inorganic aerogel composites can have physical or chemical characteristics that are substantially similar or different from its individual elements. For example, if thermal insulation is the desired characteristic of the aerogel, an aerogel composite may improve the brittleness of the aerogel and at the same time retain substantially similar or improve the thermal insulation properties as the aerogel.

The term "binder" refers to a substance that holds or draws other materials together to form a single entity. Binders can be organic or inorganic substances, and can be a liquid or a solid. Without wanting to be bound by theory, it is believed that binders draw materials together by either physical or chemical interactions or both. In this regard, it is believed that the binder helps prevent phase separation. As used herein, "polymer binder" is hence a polymeric material which can act as a binder, i.e. capable of holding or drawing materials together. "Water soluble binder" thus refers to a binder which is at least substantially soluble in an aqueous medium. "Water soluble polymeric binder" thus refers to a polymer binder which is at least substantially soluble in an aqueous medium. Accordingly, in the present context, the binder acts to hold or draw together at least the cellulose component and/or the silica component.

The term `crosslinking agent' refers to a substance that contains two or more ends capable of interacting with specific groups on other substance. This interaction can be by means of physical or chemical interaction. The crosslinking agent may form one or more interactions between itself and the other substance. In this sense, the crosslinking agent may assist in forming a three-dimensional network of inter-connected substance(s).

The term "aqueous solution" or "aqueous medium" used herein refers to a water based solvent or solvent system, and which comprises of mainly water. Such solvents can be either polar or non-polar, and/or either protic or aprotic. Solvent systems refer to combinations of solvents which resulting in a final single phase. Both 'solvents' and 'solvent systems' can include, and is not limited to, pentane, cyclopentane, hexane, heptane, cyclohexane, benzene, toluene, dioxane, chloroform, diethylether, dichloromethane, tetrahydrofuran, ethyl acetate, acetone, dimethylformamide, acetonitrile, dimethyl sulfoxide, nitromethane, propylene carbonate, formic acid, butanol, isopropanol, propanol, ethanol, methanol, acetic acid, ethylene glycol, diethylene glycol or water. Water based solvent or solvent systems can also include dissolved ions, salts and molecules such as amino acids, proteins, sugars and phospholipids. Such salts may be, but not limited to, sodium chloride, potassium chloride, ammonium acetate, magnesium acetate, magnesium chloride, magnesium sulfate, potassium acetate, potassium chloride, sodium acetate, sodium citrate, zinc chloride, HEPES sodium, calcium chloride, ferric nitrate, sodium bicarbonate, potassium phosphate and sodium phosphate. As such, biological fluids, physiological solutions and culture medium also fall within this definition. In most embodiments, the aqueous solution is water. In some embodiments, the aqueous solution is deionised water. In some embodiments, the aqueous solution is Millipore water. In some embodiments, the aqueous solution is water resulting from an alkali/base reaction.

An aqueous solution is advantageously used in the present disclosure. In particular, water is used. Water can be evaporated or sublimed from an aqueous solution via heating through controlled pressure and temperature making it the most green, desirably non-hazardous and non-toxic solvent to be used. Since water does not penetrate affect the networked structure of the aerogels, the hydrophobic properties of the aerogels are not compromised.

The present disclosure is predicated on the discovery of a novel method of synthesizing organic-inorganic aerogel composites which also results in novel aerogel composites. In particular, the present disclosure discloses a method of synthesizing cellulose-silica aerogel composites with, for instance, advantageously low thermal conductivity, good acoustic insulation property and/or high oil absorption capacity. These organic inorganic aerogels can have applications in, for instance, thermal insulations, acoustic insulations and/or oil absorption.

Oil spills have been considered as one of the most serious disasters that are threatening marine ecosystem. There are many ways for oil spill clean-up, which can be broadly classified into chemical, biological and physical methods. Among these methods, physical sorption method is considered to be the most effective due to its ability to collect and completely remove oil from oil spill sites. There have been several materials used as absorbents for oil spill cleaning. The oil absorbents can be classified as inorganic mineral, synthetic organic and natural organic materials. However, most of the materials show low oil absorption ability of 4-10x and also absorb water. Therefore, there is high demand in finding new environmentally friendly absorbents with high oil absorption capacity, good selectiveness and low cost for oil spill removal.

In accordance with the present disclosure, there is provided a method of fabricating an organic-inorganic aerogel composite, comprising the steps of:
a) providing a cellulose component, derived from a plant based material, dispersed in an aqueous medium;
b) adding a water soluble binder and a water soluble polymer to the aqueous medium to form a first mixture;
c) forming a silica component, which is derived from a plant based silicate material, *in situ* when contacted with the first mixture for a predetermined time and condition to form a second mixture;
d) gelling the second mixture; and
e) drying the second mixture to form an organic-inorganic aerogel composite.

In an embodiment, the step of providing a cellulose component dispersed in an aqueous medium comprises sonicating the cellulose component in the aqueous medium. In another embodiment, dispersing in the aqueous medium comprises ultrasonicating the cellulose component in the aqueous medium. In another embodiment, dispersing in the aqueous medium comprises mechanical mixing the cellulose component in the aqueous medium. In another embodiment, dispersing in the aqueous medium comprises heating and mixing the cellulose component in the aqueous medium. In another embodiment, dispersing in the aqueous medium comprises shear mixing the cellulose component in the aqueous medium.

In an embodiment, the step of providing a cellulose component dispersed in an aqueous medium comprises sonicating the cellulose component in the aqueous medium for 120 min. In another embodiment, the sonication is performed for 110 min. In another embodiment, the sonication is performed for 100 min. In another embodiment, the sonication is performed for 90 min. In another embodiment, the sonication is performed for 80 min. In another embodiment, the sonication is performed for 60 min. In another embodiment, the sonication is performed for 40 min. In another embodiment, the sonication is performed for 30 min. In another embodiment, the sonication is performed for 20 min. In another embodiment, the sonication is performed for 10 min. In another embodiment, the sonication is performed for 5 min.

In certain embodiments, the step of adding a water soluble binder comprises adding a water soluble polymer binder. The water soluble binder may include at least one of -COOH or -NH₂ or both functional groups on the water soluble binder, which may act to hold or draw together the cellulose and/or the silica component. In this regard, the cellulose and silica components are held together without them phase separating. Accordingly, the water soluble binder may act as a cross-linking agent or a gelling agent. The water soluble polymeric binder may be selected from a group comprising of, but not limited to, gelatin, polyacrylamide, polyvinyl pyrrolidone, polymethacrylamide, polyvinylalcohol, or a combination thereof. In an embodiment, the water soluble binder is polyvinyl pyrrolidone. In an embodiment, the water soluble binder is polyvinyl alcohol.

The addition of the water soluble polymer unexpectedly provides for an organic - inorganic aerogel composite with a homogeneous cross-sectional distribution. Without wanting to be bound by theory, it is believed that the water soluble polymer modifies the surface of the cellulose component by coating its surface. Accordingly, the presence of the water soluble polymer on the surface of the cellulose component improves the water solubility of the cellulose component. Secondly, the water soluble polymer also prevents multi-layer formation of the cellulose component, thus preventing the cellulose component from lumping. Thirdly, the water soluble polymer provides potential sites for silicate to condense and/or for silica particles to adhere. Fourthly, the potential sites on the water soluble polymer is possibly also sterically hindered by the polymer chain backbone, and thus accordingly may limit the size of the silica particle formation. In this way, while the water soluble binder holds and draws together the cellulose and silica components, the water soluble polymer by coating the cellulose component allows for a good inter-mix of cellulose and silica such that an organic-inorganic aerogel composite with a homogenous distribution can be obtained. Accordingly, desirable aerogel properties such as thermal insulation, acoustic insulation and/or oil absorption is achievable.

As mentioned, the present disclosure discloses a method wherein the water soluble binder and water soluble polymer is added to the cellulose component. In an embodiment, the water soluble polymer is added together with the water soluble binder to form the first mixture. In another embodiment, the water soluble polymer is added separately from the water soluble binder to form the first mixture. In another embodiment, the water soluble binder and water soluble polymer is added sequentially to form the first mixture. In another embodiment, the water soluble polymer is added to the first mixture. In another embodiment, the fabrication method further comprising a step of adding a water soluble polymer to the cellulose component for modifying the surface of the cellulose component.

In an embodiment, the water soluble polymer is a cationic polymer. In another embodiment, the water soluble polymer is an amphoteric polymer. In another embodiment, the water soluble polymer is a zwitterionic polymer. In another embodiment, the water soluble polymer is a hydrophobic-modified water soluble polymer (HMWS). HMWS polymers typically have hydrophobic side chains or end-capped on a hydrophilic backbone. Accordingly, the water soluble polymer may be selected from the group comprising of cationic starch, polyethyleneimine, poly(dimethylamine(co)epichlorohydrin), poly(dimethylamine-co epichlorohydrin-co-ethylenediamine), polyamide-epichlorohydrin or dicyandiamide resins. In some embodiments, the water soluble polymer is cationic starch.

It was found that it was beneficial to use an aqueous medium for the fabrication. For example, water may be used. The use of water means that removal of solvent either by evaporation and/or sublimation can be accurately controlled through pressure and temperature. As a result, the fabrication process is greener, as non-hazardous and non-toxic solvent can be used. Further, it was discovered that water does not penetrate and affect the networked structure of the aerogels, and accordingly, the hydrophobic properties of the aerogels are not compromised.

In certain embodiments, the step of forming a silica component comprises converting the silicate material to the silica component. In this regard, the silicate material is chemically converted to silica, for example, from SiO₃²⁻, SiO₄²⁻ to SiO₂. In some embodiments, soluble silicate (in aqueous medium) is converted into a non-soluble state. In certain embodiments, soluble silicate is converted into a non-soluble dispersed state. In other embodiments, soluble silicate is converted into a non-soluble solid state.

Silicate can be formed into silica by the addition of acids or certain inorganic salts. Conditions employed during this formation are extremely important in determining the final product properties. For example, the amount of aqueous medium, temperature, pH and/or impurities can influence the formation of silica. In some embodiments, this conversion occurs in situ when contacted with the first mixture. In another embodiment, the conversion occurs in situ immediately after contacting with the first mixture. In another embodiment, the conversion occurs in situ some time after contacting with the first mixture. In another embodiment, the conversion occurs in situ 2 min after contacting with the first mixture. In another embodiment, the conversion occurs in situ 5 min after contacting with the first mixture. In another embodiment, the conversion occurs in situ 10 min after contacting with the first mixture. In another embodiment, the conversion occurs in situ 15 min after contacting with the first mixture. In another embodiment, the conversion occurs in situ 20 min after contacting with the first mixture. In another embodiment, the conversion occurs in situ 30 min after contacting with the first mixture. In another embodiment, the conversion occurs in situ 40 min after contacting with the first mixture. In another embodiment, the conversion occurs in situ 50 min after contacting with the first mixture. In another embodiment, the conversion occurs in situ 60 min after contacting with the first mixture.

In an embodiment, the silicate is 100% formed into silica. In another embodiment, the silicate is 95% formed into silica. In another embodiment, the silicate is 90% formed into silica. In another embodiment, the silicate is 85% formed into silica. In another embodiment, the silicate is 80% formed into silica. In another embodiment, the silicate is 75% formed into silica. In another embodiment, the silicate is 70% formed into silica. In another embodiment, the silicate is 60% formed into silica. In another embodiment, the silicate is 50% formed into silica. In another embodiment, the silicate is 40% formed into silica. In another embodiment, the silicate is 30% formed into silica. In another embodiment, the silicate is 20% formed into silica.

In an embodiment, the predetermined time is 1 min to 120 min. In another embodiment, the predetermined time is 2 min to 110 min. In another embodiment, the predetermined time is 3 min to 100 min. In another embodiment, the predetermined time is 4 min to 90 min. In another embodiment, the predetermined time is 5 min to 80 min. In another embodiment, the predetermined time is 5 min to 70 min. In an embodiment, the predetermined time is 5 min to 60 min. In another embodiment, the predetermined time is 5 min to 50 min. In another embodiment, the predetermined time is 5 min to 40 min. In another embodiment, the predetermined time is 5 min to 30 min.

In an embodiment, the predetermined condition is a temperature of 10 °C to 100 °C. In an embodiment, the predetermined condition is a temperature of 15 °C to 100 °C. In another embodiment, the predetermined condition is a temperature of 20 °C to 100 °C. In another embodiment, the predetermined condition is a temperature of 25 °C to 100 °C. In another embodiment, the predetermined condition is a temperature of 30 °C to 100 °C. In another embodiment, the predetermined condition is a temperature of 35 °C to 100 °C. In another embodiment, the predetermined condition is a temperature of 45 °C to 100 °C. In another embodiment, the predetermined condition is a temperature of 50°C to 100°C.

In an embodiment, the predetermined condition is a pH of 2 to 8. In another embodiment, the predetermined condition is a pH of 3 to 7.5. In another embodiment, the predetermined condition is a pH of 4 to 7.5. In another embodiment, the predetermined condition is a pH of 5 to 7.5. In another embodiment, the predetermined condition is a pH of 6 to 7.5. In an embodiment, the predetermined condition is a pH of 6.5 to 7.5. In another embodiment, the predetermined condition is a pH of 6 to 7.

The gelling step refers to the process in which components dispersed in the aqueous medium come together to form a continuous three-dimensional network extending throughout the aqueous medium (a gel). This allows the components to come together as a semi-rigid dispersion. In an embodiment, a gelling agent is added to form the gel. In some embodiments, the components agglomerate to form the gel. In some embodiments, the gelling step comprises precipitating the silica component. In another embodiment, the gelling step comprises crosslinking of the cellulose, silica and water soluble binder components. In another embodiment, the gelling step comprises precipitating the silica component and crosslinking the cellulose, silica and water soluble binder component.

In an embodiment, the gelling step is performed for at least 10 min. In another embodiment, the gelling step is performed for at least 20 min. In another embodiment, the gelling step is performed for at least 30 min. In another embodiment, the gelling step is performed for at least 40 min. In another embodiment, the gelling step is performed for at least 50 min. In another embodiment, the gelling step is performed for at least 60 min. In another embodiment, the gelling step is performed for at least 70 min. In another embodiment, the gelling step is performed for at least 80 min. In another embodiment, the gelling step is performed for at least 90 min. In another embodiment, the gelling step is performed for at least 100 min. In another embodiment, the gelling step is performed for at least 110 min. In another embodiment, the gelling step is performed for at least 120 min.

In an embodiment, the gelling step is performed for at 0 °C. In another embodiment, the gelling step is performed for at 5 °C. In another embodiment, the gelling step is performed for at 10 °C. In another embodiment, the gelling step is performed for at 15 °C. In another embodiment, the gelling step is performed for at 20 °C. In another embodiment, the gelling step is performed for at 25 °C. In another embodiment, the gelling step is performed for at 30 °C. In another embodiment, the gelling step is performed for at 35 °C. In another embodiment, the gelling step is performed for at 40 °C. In another embodiment, the gelling step is performed for at 50 °C. In another embodiment, the gelling step is performed for at 60 °C. In another embodiment, the gelling step is performed for at 70 °C. In another embodiment, the gelling step is performed for at 80 °C. In another embodiment, the gelling step is performed for at 90°C.

In some embodiments, the second mixture is shaped in a mold before drying. The mold may be of any desired shape or size. Individual molds may be used to cast silica aerogel composites as panels. Alternatively, a mold may be used to cast the silica aerogel composite which is then subsequently cut into a desired shape and size. For example, the mold may be in one dimension 150 mm, 200 mm, 250 mm, 300 mm, 350 mm, 400 mm, 450 mm, 500 mm, 600 mm, 700 mm, 800 mm, 900 mm, 1000 mm, 1200 mm, 1400 mm, 1600 mm, 1800 mm, 2000 mm, 2500 mm, 3000 mm, 4000 mm, 5000 mm, 7500 mm or 10000 mm. In an embodiment, the size of the mold is 600 mm by 2500 mm.

In certain embodiments, the step of drying the second mixture to form an organic-inorganic aerogel composite comprises supercritical drying. Accordingly, the present disclosure provided a method of fabricating an organic-inorganic aerogel composite, comprising the steps of:
a) providing a cellulose component, derived from a plant based material, dispersed in an aqueous medium;
b) adding a water soluble binder and a water soluble polymer to the aqueous medium to form a first mixture;
c) forming a silica component, which is derived from a plant based silicate material, *in situ* when contacted with the first mixture for a predetermined time and condition to form a second mixture;
d) gelling the second mixture; and
e) super-critical drying the second mixture to form a organic-inorganic aerogel composite.

In other embodiments, the step of drying the second mixture to form an organic-inorganic aerogel composite comprises supercritical drying using CO₂.

In another embodiment, the step of drying the second mixture to form an organic-inorganic aerogel composite comprises freeze drying. Accordingly, there is provided a method of fabricating an organic inorganic aerogel composite, comprising the steps of:
a) providing a cellulose component, derived from a plant based material, dispersed in an aqueous medium;
b) adding a water soluble binder and a water soluble polymer to the aqueous medium to form a first mixture;
c) forming a silica component, which is derived from a plant based silicate material, *in situ* when contacted with the first mixture for a predetermined time and condition to form a second mixture;
d) gelling the second mixture; and
e) freeze drying the second mixture to form an organic-inorganic aerogel composite.

As used herein, the drying step involves extracting a liquid component from a gel or a solid component. In particular, the drying step involves extracting a liquid component from a solid component. For example, the second mixture may be dried to form an organic-inorganic aerogel composite. Supercritical drying and freeze drying is a process which extracts a liquid component in a precise and controlled way. As a liquid crosses the boundary from liquid to gas, the liquid changes into gas at a finite rate, while the amount of liquid decreases. When this happens within a heterogeneous environment, surface tension in the liquid body pulls against any solid structures which the liquid may be in contact with. Delicate structures such as cell walls and dendrites in silica gel may be broken apart by this surface tension as the liquid-gas-solid junction moves by. To avoid this, a sample can be brought via two possible alternate paths from the liquid phase to the gas phase without crossing the liquid-gas boundary on the phase diagram. In freeze-drying, this means going around using low temperature and/or low pressure. Supercritical drying, on the other hand, goes around using high-temperature and/or high-pressure. Accordingly, this route from liquid to gas does not cross any phase boundary, instead passing through the supercritical region, where the distinction between gas and liquid ceases to apply. Densities of the liquid phase and vapor phase become equal at critical point of drying.

Supercritical Fluid Extraction (SFE) or super-critical drying is the process of separating one component (the extractant) from another (the matrix) using supercritical fluids as the extracting solvent. Extraction is usually from a solid matrix, but can also be from liquids. SFE can be used as a sample preparation step for analytical purposes, or on a larger scale to either strip unwanted material from a product (e.g. decaffeination) or collect a desired product. Carbon dioxide (CO₂) is the most used supercritical fluid, sometimes modified by cosolvents such as ethanol or methanol. Extraction conditions for supercritical carbon dioxide are above the critical temperature of 31 °C and critical pressure of 74 bar. Addition of modifiers may slightly alter this.

Extraction is a diffusion-based process, in which the solvent is required to diffuse into the matrix and the extracted material to diffuse out of the matrix into the solvent. Diffusivities are much faster in supercritical fluids than in liquids, and therefore extraction can occur faster. In addition, due to the lack of surface tension and negligible viscosities compared to liquids, the solvent can penetrate ignore into the matrix inaccessible to liquids. An extraction using an organic liquid may take several hours, whereas supercritical fluid extraction can be completed in 10 to 60 minutes.

Since freeze drying is a change in state from the solid phase to the gaseous phase, the material to be freeze dried must firstly be adequately frozen. The method of freezing and the final temperature of the frozen product can affect the ability to successfully freeze dry the material. For example, rapid cooling may result in small ice crystals, useful in preserving structures to be examined microscopically, but may result in a product that may be difficult to be freeze dried. However, slower cooling results in large ice crystals which produces less restrictive channels in the matrix during the drying process. Thus the conditions for freezing the second mixture contribute to the properties of the resultant silica aerogel composite.

In an embodiment, the freeze step is performed at the freezing point of the aqueous medium. In another embodiment, the freeze step is performed at 0 °C. In another embodiment, the freeze step is performed at - 5 °C. In another embodiment, the freeze step is performed at -10 °C. In another embodiment, the freeze step is performed at -15 °C. In another embodiment, the freeze step is performed at -20 °C. In another embodiment, the freeze step is performed at -25 °C. In another embodiment, the freeze step is performed at -30 °C. In another embodiment, the freeze step is performed at -50 °C. In another embodiment, the freeze step is performed at -75 °C. In another embodiment, the freeze step is performed under liquid nitrogen.

Freeze drying involves the removal of water or other solvent from a frozen product by sublimation. Sublimation occurs when a frozen liquid goes directly to the gaseous state without passing through the liquid phase and it allows the preparation of a stable product that is easy to use and aesthetic in appearance. It also allows the gel framework to retain its structure and not collapse under tension. Several factors can affect the ability to freeze dry a frozen mixture. For sublimation of ice to occur, careful control of the two parameters, temperature and pressure, is required. Without wanting to be bound by theory, it is believed that the rate of sublimation of ice from a frozen product depends upon the difference in vapour pressure of the product compared to the vapour pressure of the ice collector. Molecules migrate from the higher pressure sample to a lower pressure area. Since vapour pressure is related to temperature, it is necessary that the product temperature is warmer than the cold trap (ice collector) temperature. It is important that the temperature at which a product is freeze dried is balanced between the temperature that maintains the frozen integrity of the product and the temperature that maximizes the vapour pressure of the product. This balance is key to optimum drying.

For example, in freeze drying of water, if the pressure is higher than 6.11 mbar, water passes through all three phases (solid, liquid, gas) when the temperature is lowered or raised. At 6.11 mbar the melting pressure curve, vapour pressure curve and sublimation pressure curve meet in one point called triple point. At this point, all three phases occur simultaneously. Below this point, i.e. when the pressure is lower than 6.11 mbar, the ice is converted directly from a solid to a gaseous phase on reaching the sublimation pressure curve. The simultaneous action of vacuum and temperature has two effects on the composites. Firstly, the vacuum facilitates a tight packing order of the aerogels thus minimizing void and pores of the foamed mixture. Secondly, the double action of temperature and vacuum sublimes the water content in the foamed mixture thus leaving only the binder to be networked around the silyl-modified aerogel. Thus physio-chemical binding is achieved. The significance of this will allow any water soluble polymer to be physically bounded aided by the chemical bonds of the surface groups. In some embodiments, the second mixture is frozen well below their eutectic or glass transition point, and the temperature is raised to just below this critical temperature and the second mixture is subjected to a reduced pressure. At this point the freeze drying process is started. A third component essential in a freeze drying system is energy. Energy is supplied in the form of heat. Almost ten times as much energy is required to sublime a gram of water from the frozen to the gaseous state as is required to freeze a gram of water. Therefore, with all other conditions being adequate, heat must be applied to the product to encourage the removal of water in the form of vapour from the frozen product. The heat must be very carefully controlled, as applying more heat than the evaporative cooling in the system can remove warms the product above its eutectic or collapse temperature. Heat can be applied by several means. One method is to apply heat directly through a thermal conductor shelf such as is used in tray drying. Another method is to use ambient heat as in manifold drying. It is noteworthy that process parameters, such as minimum pressure, dew point and critical collapse temperature are essential to control the quality of the finished product. While these factors were independently discussed, it would be obvious to the skilled person that these parameters interact in a dynamic system, and it is this delicate balance between these factors that results in a properly freeze dried product with the desired properties.

These conditions will need to be carefully chosen, not only to allow for the sublimation of ice to gas, but also to ensure a good end product with good consistency.

Accordingly, in an embodiment, the freeze drying is performed using a commercially available refrigerant. Examples of refrigerant includes, but is not limited to, tetrachloromethane, trichlorofluoromethane, dichlorodifluoromethane, bromochlorodifluoromethane, dibromodifluoromethane, chlorotrifluoromethane, bromotrifluoromethane, tetrafluoromethane, chloroform, dichlorofluoromethane, chlorodiluoromethane, bromodifluoromethane, trifluoromethane, dichloromethane, chlorofluoromethane, difluoromethane, chloromethane, fluoromethane, methane, fluoroethane, chloroethane, ethane, dimethyl ether, propane, fluoropropane, and mixtures thereof. In another embodiment, the freeze drying is performed at a temperature lower than -5 °C and at a pressure in a range of 5 Pa to 400 Pa. In another embodiment, the freeze drying is performed at a temperature in a range of -35 °C to 75 °C and at a pressure in a range of 5 Pa to 400 Pa.

In certain embodiments, the organic - inorganic aerogel composite is produced from agriculture products. In other embodiments, the organic - inorganic aerogel composite is produced from agriculture waste products. In this regard, agriculture waste products are unusable or unwanted substances or material produced during or as a result of a process. For example, rice plant is grown and harvested for rice, which is consumed as a staple food. Rice straw and rice husk are accordingly waste products as they are the unwanted substances produced in the process to obtain rice. Such waste products are usually thrown away or burnt as fuel. The use of use waste produce is also economically viable as they are highly availability. It is also environmentally advantageous to convert such waste produce into more useful products without the need to landfill or subject to disposal caused by the in-field burning activities. This helps to prevent and reduce carbon emissions and footprints. Without wanting to be bound by theory, it is believed that such agriculture products can have a high content of cellulose and/or silica. For example, rice straw may contain 38% of cellulose and rice husk ash may consist of 80-90% of silica. Therefore, it is envisioned that the combination of cellulose from straw and silica from ash will provide an aerogel material which is green, environmentally friendly and economically viable. Such aerogels and aerogel composites can advantageously have good physical and chemical properties. For example, it is believed that the larger size and aspect ratio of cellulose from straw may provide the aerogel and/or aerogel composite with provide high flexibility. The thermal and acoustic insulation properties may also be further fine-tuned based on the ratio of cellulose and silica (in addition to the aerogel formation conditions). Further, as natural cellulose also contains other natural side products such as hemicellulose, pectin and lignin, it is believed that these side products (impurities) may improve the flexibility and/or oil absorption properties of the aerogel and/or aerogel composite. For example, it is believed that the non-linear molecular structures (i.e. branched structure) of hemicellulose and lignin may improve the organic - inorganic aerogel composite flexibility and/or compactness through a crosslinking function.

Accordingly, in certain embodiments, the organic - inorganic aerogel composite comprises a cellulose component, wherein the cellulose component is derived from a plant based material. In another embodiment, the cellulose component is derived from a plant based waste material. In another embodiment, the cellulose component is derived from an agriculture plant based material. In other embodiments, the cellulose component is derived from a plant based straw material. The cellulose component is derived from a straw material and may be selected from the group comprising of cereal, barley, oats, rice, rye, wheat, corn, palm, buntal, baku, washi, sisal, jute, abaca, ramie, hemp, raffia and toquilla. In other embodiments, the cellulose component is derived from rice straw. In another embodiment, the cellulose component is derived from bamboo.

To obtain the cellulose component suitable for use in fabricating organic - inorganic aerogel composites, rice straw may be processed and/or modified. In an embodiment, the rice straw is subjected to mechanical forces to break down the straw. In an embodiment, the rice straw is grounded into a powder. In an embodiment, the plant based material is rice straw grounded into powder.

The grounded rice straw may then be washed with water and desiccated. In an embodiment, the grounded rice straw is desiccated at 50 °C. In another embodiment, the desiccation is performed at 60 °C. In another embodiment, the desiccation is performed at 70 °C. In another embodiment, the desiccation is performed at 80 °C. In another embodiment, the desiccation is performed at 90 °C. In another embodiment, the desiccation is performed at 100 °C. In another embodiment, the desiccation is performed at 110 °C. In another embodiment, the desiccation is performed at 120 °C. In an embodiment the desiccation is performed for 4 hr. In another embodiment, the desiccation is performed for 5 hr. In another embodiment, the desiccation is performed for 6 hr. In another embodiment, the desiccation is performed for 7 hr. In another embodiment, the desiccation is performed for 8 hr. In another embodiment, the desiccation is performed for 9 hr. In another embodiment, the desiccation is performed for 10 hr.

The powdered rice straw may be subjected to an alkaline/base treatment or acid treatment. It was found that that such treatment enhances the suitability of the cellulose component for the organic - inorganic aerogel composite. Without wanting to be bound by theory, it is believed that the treatment can impregnate the rice straw and helps to regulate the amount of impurities in the cellulose component and hence affects the property of the organic-inorganic aerogel composite. It also helps to restructure the cellulose crystalline and amorphous regions within the molecular chains. For example, the treatment may facilitate the dissolution of non-cellulose materials from the rice straw. In another example, the treatment may extract the non-cellulose materials from the rice straw. On heat-treatment, treatment facilitates intermolecular condensation reaction on one hand but retards the thermal degradation of cellulose molecules on the other hand. Further, the oxygen-containing surface functional groups newly created by the oxidation process can alter the porosities of the rice straw and influence the reactivity of the cellulose component with the silica component and the water soluble binder.

Accordingly, in some embodiments, the cellulose plant based material is subjected to an alkaline/base treatment, wherein the treatment comprises at least one of the following: LiOH, ZnOH, KOH, NH₄OH, NaOH, Mg(OH)₂, Ca(OH)₂, lye, or a mixture thereof. In another embodiment, the treatment further comprises H₂O₂. In another embodiment, the treatment comprises KOH and H₂O₂. In another embodiment, the treatment comprises NH₄OH and H₂O₂. In an embodiment, the plant based material is rice straw grounded into powder, which is subjected to a treatment with NaOH and H₂O₂.

In some embodiments, the cellulose plant based material is subjected to an acid treatment, wherein the treatment comprises at least one of the following: HCl, HNOs, H₂SO₄, or a mixture thereof. In another embodiment, the treatment further comprises ethanol. In another embodiment, the treatment comprises ethanol and H₂SO₄. In another embodiment, the treatment comprises methanol and HCl.

In certain embodiments, the treatment comprises treating 1 g of cellulose with 0.020 moles of alkaline/base or acid. In other embodiments, the treatment comprises 0.019 moles of alkaline/base or acid. In other embodiments, the treatment comprises 0.018 moles of alkaline/base or acid. In other embodiments, the treatment comprises 0.017 moles of alkaline/base or acid. In other embodiments, the treatment comprises 0.016 moles of alkaline/base or acid. In other embodiments, the treatment comprises 0.015 moles of alkaline/base or acid. In other embodiments, the treatment comprises 0.014 moles of alkaline/base or acid. In other embodiments, the treatment comprises 0.013 moles of alkaline/base or acid. In other embodiments, the treatment comprises 0.012 moles of alkaline/base or acid. In other embodiments, the treatment comprises 0.011 moles of alkaline/base or acid. In other embodiments, the treatment comprises 0.010 moles of alkaline/base or acid. In other embodiments, the treatment comprises 0.009 moles of alkaline/base or acid. In other embodiments, the treatment comprises 0.008 moles of alkaline/base or acid. In other embodiments, the treatment comprises 0.007 moles of alkaline/base or acid. In other embodiments, the treatment comprises 0.006 moles of alkaline/base or acid. In other embodiments, the treatment comprises 0.005 moles of alkaline/base or acid.

In an embodiment, the treatment is performed at -30 °C. In another embodiment, the treatment is performed at -20 °C. In another embodiment, the treatment is performed at -10 °C. In another embodiment, the treatment is performed at 0 °C. In another embodiment, the treatment is performed at 10 °C. In another embodiment, the treatment is performed at 20 °C. In another embodiment, the treatment is performed at 30 °C. In another embodiment, the treatment is performed at 40 °C. In another embodiment, the treatment is performed at 50°C.

In an embodiment the treatment is performed for 2 hr. In another embodiment, the treatment is performed for 3 hr. In another embodiment, the treatment is performed for 4 hr. In another embodiment, the treatment is performed for 5 hr. In another embodiment, the treatment is performed for 6 hr. In another embodiment, the treatment is performed for 7 hr. In another embodiment, the treatment is performed for 8 hr. In another embodiment, the treatment is performed for 9 hr. In another embodiment, the treatment is performed for 10 hr.

The resultant processed cellulose plant based material may accordingly now be suitable for use as a cellulose component. In an embodiment, the cellulose component has a length of 5 µm to 500 µm. In another embodiment, the cellulose component has a length of 5 µm to 450 µm. In another embodiment, the cellulose component has a length of 10 µm to 400 µm. In another embodiment, the cellulose component has a length of 10 µm to 350 µm. In another embodiment, the cellulose component has a length of 10 µm to 300 µm. In another embodiment, the cellulose component has a length of 10 µm to 250 µm. In another embodiment, the cellulose component has a length of 10 µm to 200 µm. In another embodiment, the cellulose component has a length of 10 µm to 150 µm. In another embodiment, the cellulose component has a length of 10 µm to 100 µm. In another embodiment, the cellulose component has a length of 10 µm to 80 µm.

In an embodiment, the cellulose component has an aspect ratio of 20 to 200. In another embodiment, the cellulose component has an aspect ratio of 20 to 180. In another embodiment, the cellulose component has an aspect ratio of 20 to 160. In another embodiment, the cellulose component has an aspect ratio of 30 to 140. In another embodiment, the cellulose component has an aspect ratio of 40 to 120. In an embodiment, the cellulose component has an aspect ratio of 50 to 100. In another embodiment, the cellulose component has an aspect ratio of 50 to 80.

In a similar manner, the silica component may also be sourced from a plant based material. This makes the organic-inorganic aerogel composite even more environmentally friendly and economically viable. In another embodiment, silica component is derived from a plant based waste material. In another embodiment, the silica component is derived from an agriculture plant based material. In other embodiments, the silica component is derived from a plant based ash material. In another embodiment, the silica component is derived from a plant based husk ash material. Accordingly, the silica component may be selected from the group comprising of cereal husk ash, barley husk ash, oats hull ash, rice husk ash, rye husk ash, wheat husk ash, and corn husk ash. In other embodiments, the silica component is derived from rice husk ash. In another embodiment, the silica component is derived from bamboo.

As mentioned above, the silica component may be derived from a plant based silicate material. The step of forming a silica component comprises converting the silicate material to the silica component. To enhance the suitability of husk ash (for example) for use in fabricating organic-inorganic aerogel composite, further processing may be required. The husk ash may be subjected to an alkaline/base treatment or acid treatment. It was found that that treatment facilitates the dissolution of husk ash to silicate while at the same time allows the removal of impurities such as carbon. The control of the parameters of this treatment provides advantageously the ability to fine tune the amount of silicate to be added to make the organic - inorganic aerogel composite as well as facilitate the conversion of silicate to silica in the fabrication of the organic inorganic aerogel composite.

Accordingly, in some embodiments, the husk ash, for example rice husk ash, is subjected to an alkaline/base treatment, wherein the treatment comprises at least one of the following: LiOH, Zn(OH)₂, KOH, NH₄OH, NaOH, Mg(OH)₂, Ca(OH)₂, lye, or a mixture thereof. In another embodiment, the treatment comprises KOH. In another embodiment, the treatment comprises NH₄OH. In an embodiment, the silica component is rice husk ash, which is subjected to a treatment with NaOH.

In some embodiments, the hush ash, for example rice husk ash, is subjected to an acid treatment, wherein the treatment comprises at least one of the following: HCl, HNOs, H₂SO₄, or a mixture thereof. In another embodiment, the treatment further comprises ethanol. In another embodiment, the treatment comprises ethanol and H₂SO₄. In another embodiment, the treatment comprises methanol and HCl.

In certain embodiments, the treatment comprises treating 1 g of husk ash (for example) with 0.020 moles of alkaline/base or acid. In other embodiments, the treatment comprises 0.019 moles of alkaline/base or acid. In other embodiments, the treatment comprises 0.018 moles of alkaline/base or acid. In other embodiments, the treatment comprises 0.017 moles of alkaline/base or acid. In other embodiments, the treatment comprises 0.016 moles of alkaline/base or acid. In other embodiments, the treatment comprises 0.015 moles of alkaline/base or acid. In other embodiments, the treatment comprises 0.014 moles of alkaline/base or acid. In other embodiments, the treatment comprises 0.013 moles of alkaline/base or acid. In other embodiments, the treatment comprises 0.012 moles of alkaline/base or acid. In other embodiments, the treatment comprises 0.011 moles of alkaline/base or acid. In other embodiments, the treatment comprises 0.010 moles of alkaline/base or acid. In other embodiments, the treatment comprises 0.009 moles of alkaline/base or acid. In other embodiments, the treatment comprises 0.008 moles of alkaline/base or acid. In other embodiments, the treatment comprises 0.007 moles of alkaline/base or acid. In other embodiments, the treatment comprises 0.006 moles of alkaline/base or acid. In other embodiments, the treatment comprises 0.005 moles of alkaline/base or acid.

In an embodiment, the treatment is performed at 40 °C. In another embodiment, the treatment is performed at 50 °C. In another embodiment, the treatment is performed at 60 °C. In another embodiment, the treatment is performed at 70 °C. In another embodiment, the treatment is performed at 80 °C. In another embodiment, the treatment is performed at 90 °C. In another embodiment, the treatment is performed at 100 °C.

In an embodiment the treatment is performed for 0.5 hr. In another embodiment, the treatment is performed for 1 hr. In another embodiment, the treatment is performed for 1.5 hr. In another embodiment, the treatment is performed for 2 hr. In another embodiment, the treatment is performed for 2.5 hr. In another embodiment, the treatment is performed for 3 hr. In another embodiment, the treatment is performed for 4 hr. In another embodiment, the treatment is performed for 5 hr. In another embodiment, the treatment is performed for 6 hr.

In an embodiment, the plant based silicate material is filtered. In another embodiment, the plant based silicate material is vacuum filtered.

The resultant processed plant based silicate material may accordingly now be suitable for use in forming the silica component. In an embodiment, forming the silica component comprises forming silica particle. In another embodiment, forming the silica component comprises forming a silica layer on the cellulose component. In another embodiment, forming the silica component comprises forming a silica coating on the cellulose component.

In an embodiment, the silica component is of a particulate form. In another embodiment, the silica particle size is 20 nm to 400 nm. In another embodiment, the silica particle size is 20 nm to 350 nm. In another embodiment, the silica particle size is 30 nm to 300 nm. In another embodiment, the silica particle size is 40 nm to 250 nm. In another embodiment, the silica particle size is 50 nm to 200 nm. In another embodiment, the silica particle size is 50 nm to 180 nm. In another embodiment, the silica particle size is 50 nm to 150 nm. In another embodiment, the silica particle size is 50 nm to 130 nm. In another embodiment, the silica particle size is 50 nm to 100 nm.

In an embodiment, when silica particle is formed, the silica particle is adhered to the cellulose component. In another embodiment, the silica particle is adhered to the cellulose component via the water soluble polymer. In another embodiment, the silica particle forms on the cellulose component. In another embodiment, the silica particle forms on the water soluble polymer. In another embodiment, the silica particle forms freely in the second mixture.

It has been found by the inventors that the resultant properties of the organic-inorganic aerogel composite may be further beneficially altered by the addition of a water soluble polymer. Without wanting to be bound by theory, it is believed that the water soluble polymer adsorbs onto the surface of the cellulose component to form a coating layer. The polymer layer on the cellulose component act to keep the individual cellulose fibers apart and prevent aggregation and/or agglomeration before the gelling stage. In this regard, the polymer layer may allow for electrostatic repulsion between the cellulose fibers. Further, the polymer layer on the cellulose fibers facilitates silica formation on the surface of the cellulose fibers, which advantageously produces an organic - inorganic aerogel composite which is further homogeneously dispersed and/or with further improved mechanical properties. For example, the organic-inorganic aerogel composite may have better compressive strength compared to an organic-inorganic aerogel composite without the water soluble polymer. The water soluble polymer may also act as a cross-linker, which aids in improving the homogeneity of the organic-inorganic aerogel composite. The water soluble polymer also alters the hydrophilicity hydrophobicity of the aerogel.

Surface functionalization may be required for reaction to take place. Hydrophobic groups on aerogel will need to be reduced to create more hydroxyl groups. This can be done with using pluronics to increase the wettability or ammonium fluoride at elevated temperature. A water-soluble polymer, is an ideal binder, will then be able to covalently bind with the oxy-TMS groups or the OH groups on aerogels. Water-soluble materials are hydrophilic and bonding is achieved through hydrogen bonds and weak Van Der Waals' interaction between the material and water. Inorganic compounds are added during homogenization to achieve non-combustibility. Thereafter hydrophobic plasticizers can be added to improve the hydrophobicity of the matrix as well as the composite before the coating process.

In an embodiment, the water soluble polymer is 1% to 20% of the final organic - inorganic aerogel composite weight. In another embodiment, the water soluble polymer is 2% to 18% of the final composite weight. In another embodiment, the water soluble polymer is 3% to 16% of the final composite weight. In another embodiment, the water soluble polymer is 4% to 15% of the final composite weight. In another embodiment, the water soluble polymer is 5% to 14% of the final composite weight. In another embodiment, the water soluble polymer is 6% to 13% of the final composite weight. In another embodiment, the water soluble polymer is 7% to 12% of the final composite weight. In another embodiment, the water soluble polymer is 8% to 11% of the final composite weight.

The organic-inorganic aerogel composite is an aerogel comprising cellulose and silica. In an embodiment, the cellulose component is 40% to 90% of the final composite weight. In another embodiment, the cellulose component is 45% to 85% of the final composite weight. In another embodiment, the cellulose component is 50% to 80% of the final composite weight. In another embodiment, the cellulose component is 55% to 75% of the final composite weight. In an embodiment, the cellulose component is 60% to 75% of the final composite weight. In another embodiment, the cellulose component is 65% to 75% of the final composite weight.

In an embodiment, the silica component is 10% to 60% of the final composite weight. In another embodiment, the silica component is 15% to 55% of the final composite weight. In another embodiment, the silica component is 20% to 50% of the final composite weight. In another embodiment, the silica component is 25% to 45% of the final composite weight. In another embodiment, the silica component is 30% to 40% of the final composite weight. In another embodiment, the silica component is 30% to 35% of the final composite weight.

As the organic - inorganic aerogel composite is derived from plant based materials, the aerogel composite may further comprise plant based impurities. For example, the organic - inorganic aerogel composite may comprise impurities such hemicellulose, pectin and/or lignin. In an embodiment, the organic - inorganic aerogel composite further comprises hemicellulose. In another embodiment, the organic - inorganic aerogel composite further comprises pectin. In another embodiment, the organic - inorganic aerogel composite further comprises lignin. In another embodiment, the organic - inorganic aerogel composite further comprises a plant based impurity at less than 10% of the final composite weight. In another embodiment, the organic - inorganic aerogel composite further comprises a plant based impurity at 10% of the final composite weight. In another embodiment, the organic - inorganic aerogel composite further comprises a plant based impurity at 9% of the final composite weight. In another embodiment, the organic - inorganic aerogel composite further comprises a plant based impurity at 8% of the final composite weight. In another embodiment, the organic - inorganic aerogel composite further comprises a plant based impurity at 7% of the final composite weight. In another embodiment, the organic - inorganic aerogel composite further comprises a plant based impurity at 6% of the final composite weight. In another embodiment, the organic - inorganic aerogel composite further comprises a plant based impurity at 5% of the final composite weight. In another embodiment, the organic - inorganic aerogel composite further comprises a plant based impurity at 4% of the final composite weight. In another embodiment, the organic - inorganic aerogel composite further comprises a plant based impurity at 3% of the final composite weight. In another embodiment, the organic - inorganic aerogel composite further comprises a plant based impurity at 2% of the final composite weight. In another embodiment, the organic - inorganic aerogel composite further comprises a plant based impurity at 1% of the final composite weight. In another embodiment, the organic - inorganic aerogel composite further comprises a plant based impurity at less than 1% of the final composite weight.

In an embodiment, the organic - inorganic aerogel composite further comprises an impurity from the treatment of plant based material and/or plant based silicate material. Examples of such impurities may be, but not limited to, Li, Zn, K, Na, Mg, Ca, Cl, N, or S. In another embodiment, the impurity is less than 10% of the final composite weight. In another embodiment, the impurity is 10% of the final composite weight. In another embodiment, the impurity is 9% of the final composite weight. In another embodiment, the impurity is 8% of the final composite weight. In another embodiment, the impurity is 7% of the final composite weight.

In another embodiment, the impurity is 6% of the final composite weight. In another embodiment, the impurity is 5% of the final composite weight. In another embodiment, the impurity is 4% of the final composite weight. In another embodiment, the impurity is 3% of the final composite weight. In another embodiment, the impurity is 2% of the final composite weight. In another embodiment, the impurity is 1% of the final composite weight. In another embodiment, the impurity is less than 1% of the final composite weight.

Accordingly, in an embodiment, the organic - inorganic aerogel composite further comprises an impurity which is derived from the plant based material, or the treatment of plant based material and/or plant based silicate material. In another embodiment, the organic - inorganic aerogel composite further comprises an impurity which is derived from the plant based material, and the treatment of plant based material and/or plant based silicate material. In another embodiment, the impurity is less than 10% of the final composite weight. In another embodiment, the impurity is 10% of the final composite weight. In another embodiment, the impurity is 9% of the final composite weight. In another embodiment, the impurity is 8% of the final composite weight. In another embodiment, the impurity is 7% of the final composite weight. In another embodiment, the impurity is 6% of the final composite weight. In another embodiment, the impurity is 5% of the final composite weight. In another embodiment, the impurity is 4% of the final composite weight. In another embodiment, the impurity is 3% of the final composite weight. In another embodiment, the impurity is 2% of the final composite weight. In another embodiment, the impurity is 1% of the final composite weight. In another embodiment, the impurity is less than 1% of the final composite weight.

If a hydrophobically coated aerogel is desired, a further coating step may be performed. The coating step is performed by coating the organic-inorganic aerogel composite with a hydrophobic material, for example a silane coupling agent. The silane coupling agent will react with the hydrophilic functional groups and render then hydrophobic, and thus turn the aerogel hydrophobic. Specifically, the coating process involves heating the silane coupling agent to vaporize the silanes, allowing the silanes to diffuse into the air spaces in the organic-inorganic aerogel composite and react with the hydrophilic functional groups of the polymer binders to form the hydrophobic coating. The duration and temperature of coating depends on the desired degree of hydrophobicity and the type of siloxane used. In some embodiments, the duration of the coating step is 1 h, 1.5 h, 2 h, 2.5 h, 3 h, 3.5 h, 4 h, 4.5 h, 5 h, 6 h, 8 h, 10 h, about 12 h, or 24 h. In some embodiments, the temperature of the coating step is 40 °C, 45 °C, 50 °C, 55 °C, 60 °C, 65 °C, 70 °C, 75 °C, 80 °C, 85 °C, 90 °C, 95 °C, 100 °C, 105 °C, 110 °C, 115 °C, or 120 °C.

The hydrophobic coating imparts a hydrophobic nature to the aerogel composite, thus giving the aerogel composite a better shelf-life. This is especially so in a high humidity environment. The hydrophobic coating may also further enhance the water repellence or water resistance of the aerogel composite. Accordingly, the degree of coating can be controlled by varying the amount of hydrophobic material used. The degree of coating can be tested using a water sorption test or measuring the contact angles of a water/oil droplet.

The hydrophobic material can be any hydrophobic material that interacts with organic - inorganic aerogel composite. Such interaction may be chemical or physical. For example, silane coupling agent may be used. Examples of silane coupling agents are, but not limited to, methyltrichlorosilane, methyltrimethoxysilane, methyltriethoxysilane, methyltri-n-propoxysilane, methyltris(methoxyethoxy)silane, methyltriacetoxysilane, tris(dimethylamino)methylsilane, tris(cyclohexylamino)methylsilane, methyltris(methylethylketoximino)silane, trimethylsiloxytrichlorosilane, dimethyltetramethoxydisiloxane, dimethyldichlorosilane, trimethylchlorosilane, dimethyldimethoxysilane, trimethylmethoxysilane, dimethyldiethoxysilane, trimethylethoxysilane, trimethyl-n-propoxysilane, methoxypropoxytrimethylsilane, dimethyldiacetoxysilane, acetoxytrimethylsilane, bis(dimethylamino)dimethylsilane, dimethylaminotrimethylsilane, bis(diethylamino)dimethylsilane, diethylaminotrimethylsilane, hexamethylcyclotrisilazane, hexamethyldisilazane, dichlorotetramethyldisiloxane, tetramethyldiethoxydisiloxane, pentamethylacetoxydisiloxane, dichlorohexamethyltrisiloxane, bis(trimethylsiloxy)methylmethoxysilane, 1,5 -diethoxyhexamethyltrisiloxane, bis(trimethylsiloxy)dichlorosilane, chlorine terminated polydimethylsiloxane, methoxy terminated polydimethylsiloxane, ethoxy terminated polydimethylsiloxane, dimethylamine terminated polydimethylsiloxane, silanol terminated polydimethylsiloxane, dimethylethoxysilane, [tris(trimethylsiloxy)silylethyl]dimethylchlorosilane, ethyltrichlorosilane, ethyltrimethoxysilane, ethyltriethoxysilane, ethyltriacetoxysilane, propyltrichlorosilane, propyltrimethoxysilane, propyltriethoxysilane, n-butyltrichlorosilane, n-butyltrimethoxysilane, pentyltrichlorosilane, pentyltriethoxysilane, hexyltrichlorosilane, hexyltrimethoxysilane, hexyltriethoxysilane, heptyltrichlorosilane, octyltrichlorosilane, octyltrimethoxysilane, octyltriethoxysilane, decyltrichlorosilane, decyltriethoxysilane, undecyltrichlorosilane, dodecyltrichlorosilane, dodecyltriethoxysilane, tetradecyltrichlorosilane, hexadecyltrichlorosilane, hexadecyltrimethoxysilane, hexadecyltriethoxysilane, octadecyltrichlorosilane, octadecyltrimethoxysilane, octadecyltriethoxysilane, Siliclad^{®}/Glassclad^{®}18, eicosyltrichlorosilane, docosyltrichlorosilane, triacontyltrichlorosilane, ethylmethyldichlorosilane, ethyldimethylchlorosilane, propylmethyldichlorosilane, propyldimethylchlorosilane, propylmethyldimethoxysilane, propyldimethylmethoxysilane, dipropyltetramethyldisilazane, n-butyldimethylchlorosilane, n-butyldimethyl(dimethylamino)silane, hexylmethyldichlorosilane, heptylmethyldichlorosilane, octylmethyldichlorosilane, octyldimethylchlorosilane, octyldimethylmethoxysilane, octylmethyldiethoxysilane, octyldimethyl(dimethylamino)silane, dioctyltetramethyldisilazane, decylmethyldichlorosilane, decyldimethylchlorosilane, dodecylmethyldichlorosilane, dodecyldimethylchlorosilane, dodecylmethyldiethoxysilane, octadecylmethyldichlorosilane, octadecyldimethylchlorosilane, octadecylmethyldimethoxysilane, octadecyldimethylmethoxysilane, octadecylmethyldiethoxysilane, octadecyldimethyl(dimethylamino)silane, docosylmethyldichlorosilane, triacontyldimethylchlorosilane, isobutyltrichlorosilane, isobutyltrimethoxysilane, isobutyltriethoxysilane, t-butyltrichlorosilane, cyclopentyltrichlorosilane, cyclopentyltrimethoxysilane, (3,3-dimethylbutyl)trichlorosilane, thexyltrichlorosilane, cyclohexyltrichlorosilane, cyclohexyltrimethoxysilane, bicycloheptyltrichlorosilane, (cyclohexylmethyl)trichlorosilane, isooctyltrichlorosilane, isooctyltrimethoxysilane, cyclooctyltrichlorosilane, adamantylethyltrichlorosilane, 7-(trichlorosilylmethyl)pentadecane, (di-n-octylmethylsilyl)ethyltrichlorosilane, 13-(trichlorosilylmethyl)heptacosane, isopropylmethyldichlorosilane, isopropyldimethylchlorosilane, isobutyldimethylchlorosilane, isobutylmethyldimethoxysilane, t-butylmethyldichlorosilane, t-butyldimethylchlorosilane, (3,3-dimethylbutyl)dimethylchlorosilane, thexyldimethylchlorosilane, cyclohexylmethyldichlorosilane, cyclohexyldimethylchlorosilane, cyclohexylmethyldimethoxysilane, bicycloheptyldimethylchlorosilane, isooctyldimethylchlorosilane, (dimethylchlorosilyl)methylpinane, (di-n-octylmethylsilyl)ethyldimethylchlorosilane, 11-(chlorodimethylsilylmethyl)tricosane, 13-(chlorodimethylsilylmethyl)heptacosane, phenyltrichlorosilane, phenyltrimethoxysilane, phenyltriethoxysilane, phenyltriacetoxysilane, phenyltris(methylethylketoximino)silane, benzyltrichlorosilane, benzyltriethoxysilane, 1-phenyl-1-trichlorosilylbutane, phenethyltrichlorosilane, phenethyltrimethoxysilane, 4-phenylbutyltrichlorosilane, phenoxypropyltrichlorosilane, phenoxyundecyltrichlorosilane, phenylhexyltrichlorosilane, p-tolyltrichlorosilane, p-tolyltrimethoxysilane, ethylphenethyltrimethoxysilane, p-(t-butyl)phenethyltrichlorosilane, 3-(p-methoxyphenyl)propyltrichlorosilane, 1-napthyltrimethoxysilane, (1-napthylmethyl)trichlorosilane, phenylmethyldichlorosilane, phenyldimethylchlorosilane, phenylmethyldimethoxysilane, phenylmethyldiethoxysilane, phenyldimethylethoxysilane, phenylmethylbis(dimethylamino)silane, benzyldimethylchlorosilane, 1 -phenyl-1 -methyldichlorosilylbutane, phenethylmethyldichlorosilane, phenethyldimethylchlorosilane, phenethyldimethyl(dimethylamino)silane, (3-phenylpropyl)methyldichlorosilane, (3-phenylpropyl)dimethylchlorosilane, 4-phenylbutylmethyldichlorosilane, 4-phenylbutyldimethylchlorosilane, phenoxypropylmethyldichlorosilane, phenoxypropyldimethylchlorosilane, p-tolylmethydichlorosilane, p-tolyldimethylchlorosilane, (p-methylphenethyl)methyldichlorosilane, p-t-butyl)phenethyldimethylchlorosilane, 3-(p-methoxyphenyl)propylmethyldichlorosilane, m-phenoxyphenyldimethylchlorosilane, p-nonylphenoxypropyldimethylchlorosilane, (3,3,3-trifluoropropyl)trichlorosilane, (3,3,3-trifluoropropyl)trimethoxysilane, nonafluorohexyltrichlorosilane, nonafluorohexyltrimethoxysilane, nonafluorohexyltriethoxysilane, nonafluorohexyltris(dimethylamino)silane, (tridecafluoro-1,1,2,2-tetrahydrooctyl)trichlorosilane, (tridecafluoro-1,1,2,2-tetrahydrooctyl)trimethoxysilane, (tridecafluoro 1,1,2,2-tetrahydrooctyl)triethoxysilane, (heptadecafluoro-1,1,2,2-tetrahydrodecyl)trichlorosilane, (heptadecafluoro-1,1,2,2-tetrahydrodecyl)trimethoxysilane, (heptadecafluoro-1, 1,2,2-tetrahydrodecyl)triethoxysilane diethyldichlorosilane, diethyldiethoxysilane, diisopropyldichlorosilane, diisopropyldimethoxy silane, di-n-butyldichlorosilane,di-n-butyldimethoxysilane, diisobutyldimethoxysilane, diisobutyldiethoxysilane, isobutylisopropyldimethoxysilane, dicyclopentyldichlorosilane, dicyclopentyldimethoxysilane, di-n-hexyldichlorosilane, dicyclohexyldichlorosilane, di-n-octyldichlorosilane,(3,3,3-trifluoropropyl)methyldichlorosilane,(3,3,3-trifluoropropyl)dimethylchlorosilane, (3,3,3-trifluoropropyl)methyldimethoxysilane, bis(trifluoropropyl)tetramethyldisilazane, nonafluorohexylmethyldichlorosilane, nonafluorohexyldimethylchlorosilane, (tridecafluoro-1,1,2,2-tetrahydrooctyl)methyldichlorosilane, (tridecafluoro-1,1,2,2-tetrahydrooctyl)dimethylchlorosilane, (heptadecafluoro-1,1,2,2-tetrahydrodecyl)methyldichlorosilane, (heptadecafluoro-1, 1,2,2-tetrahydrodecyl)dimethylchlorosilane, diethoxydimethylsilane, diethoxydiphenylsilane, diethoxy(methyl)phenylsilane, dimethyldiphenylsilane, dimethoxy-methyl(3,3,3-trifluoropropyl)silane, ethoxytrimethylsilane, ethoxydimethylphenylsilane, isobutyl(trimethyl)silane, methoxy(dimethyl)octadecylsilane, methoxy(dimethyl)octylsilane, methoxytrimethylsilane, triethoxyphenylsilane, trimethoxyphenylsilane, or trimethoxy(3,3,3-trifluoropropyl)silane.

Accordingly, in an embodiment, the present disclosure discloses a method, further comprising a step of coating the organic - inorganic aerogel with a hydrophobic material. In some embodiments, the hydrophobic material is methyltrimethoxysilane. In some embodiments, the hydrophobic material is propyltrimethoxysilane. In an embodiment, the hydrophobic material is a mixture of silane coupling agents, for example methyltrimethoxysilane and propyltrimethoxysilane. In an embodiment, the hydrophobic material comprises at least one silane coupling agent and at least one alcohol. Examples of alcohol include, but is not limited to, methanol, ethanol, 1-propanol, isopropanol, 1-butanol, isobutanol, 2-methyl-2-butanol, cyclohexanol, 1-pentanol, or a mixture thereof. Accordingly, in an embodiment, the hydrophobic material is a mixture of hexamethyldisilazane and isopropyl alcohol. In another embodiment, the hydrophobic material is a mixture of hexamethyldisiloxane and ethanol.

Alternatively, the coating may be a coating which adheres to the surface of the aerogel composite by physical interactions. For example, the coating may be spray painted or brush painted onto the surface of the aerogel composite with a lacquer, varnish, oil, or wax. Such methods of coatings are known in the art and accordingly is not limited to the disclosure herein.

In an embodiment, the organic - inorganic aerogel composite further comprises a plasticising agent, an inorganic filler and/or a strengthening agent. Plasticising agent is an additive that may increase the plasticity or viscosity of a material, and may improve the particle density and tight packing of the organic - inorganic aerogel composite to improve the thermal insulation and acoustic insulation. Plasticising agent may be added to improve the hydrophobicity of the matrix as well as the composite before the coating process. The plasticising agent may be selected from a group comprising of, but not limited to, glycerol, sorbitol, malic acid, or a combination thereof.

Strengthening agent is an additive which may improve the mechanical property of a material. The strengthening agent may be selected from a group comprising of, but not limited to, fumed silica, mineral fiber, calcium silicate, or a combination thereof. In an embodiment, the strengthening agent is fumed silica. In another embodiment, the strengthening agent is mineral fiber. In another embodiment, the strengthening agent is calcium silicate.

Inorganic filler is an additive to enhance the property of a material. The addition of inorganic filler may enhance the fire resistance, fire retardant properties and/or acoustic insulation properties of the silica aerogel composite. The inorganic filler may be selected from a group comprising of, but not limited to, amorphous silica, ceramics, quartz, zirconium dioxide, iron (III) oxide, titanium oxide, barium sulphate, or a combination thereof. Inorganic fillers may be used to improve or impart fire resistant property to the silica aerogel composite. Examples of fire resistant inorganic fillers are, but not limited to, ceramics, zirconium dioxide, iron (III) oxide, titanium oxide, fumed silica and borates of various types, for example zinc. Inorganic fillers may be used to improve or impart fire retardant property to the silica aerogel composite. Examples of fire retardant inorganic fillers are, but not limited to, zirconia fibers, ceramic fibers and mineral fibers. Inorganic fillers may be used to improve or impart acoustic insulation property to the silica aerogel composite. Examples of acoustic insulation inorganic fillers are, but not limited to, calcium silicate and barium silicate. In an embodiment, the inorganic filler is titanium oxide. In another embodiment, the inorganic filler is barium sulphate.

It would be understood that the present disclosure provides a pre-aerogel composition as described as the first mixture. Accordingly, the present disclosure provides a pre-aerogel composition, comprising:
a) a cellulose component derived from a plant based material; and
b) a water soluble polymer;
wherein the cellulose component is modified by the water soluble polymer to form the pre-aerogel composition.

As mentioned, it is believed that the water soluble polymer interacts with the cellulose component to make the cellulose component more soluble, decreases inter-cellulose interaction and provides additional potential sites for silicate to condense or silica to adhere. In this way, the water soluble polymer by modifying the cellulose component allows for a good inter-mix of cellulose and silica such that an organic-inorganic aerogel composite with a homogenous distribution can be obtained. Accordingly, desirable aerogel properties such as thermal insulation, acoustic insulation and/or oil absorption is achievable.

In this sense, it is understood that the water soluble polymer must be added to the cellulose component and allowed to modify the cellulose component before the introduction of the silica component. As no gelation will occur before the addition of the silica component and the water soluble binder, the pre-aerogel composition may be stored under desirable conditions. Such pre-aerogel composition may then be used as needed and as required.

Examples of the cellulose component are as mentioned above. In an embodiment, the pre-aerogel composition comprises a cellulose component derived from rice straw.

Examples of the water soluble polymer are as mentioned above. In an embodiment, the water soluble polymer is a water soluble cationic polymer. In another embodiment, the water soluble polymer is cationic starch. In another embodiment, the modification is a cationic polymer coating on the cellulose component. In another embodiment, the modification is cationic polymer physisorption onto the surface of the cellulose component. In another embodiment, the modification is cationic polymer chemisorption onto the surface of the cellulose component. In another embodiment, the modification is cationic polymer physisorption and chemisorption onto the surface of the cellulose component.

In an embodiment, the water soluble polymer in the pre-aerogel composition is 1% to 20% of the cellulose component weight. In another embodiment, the water soluble polymer is 2% to 18% of the cellulose component weight. In another embodiment, the water soluble polymer is 3% to 16% of the cellulose component weight. In another embodiment, the water soluble polymer is 4% to 15% of the cellulose component weight. In another embodiment, the water soluble polymer is 5% to 14% of the cellulose component weight. In another embodiment, the water soluble polymer is 6% to 13% of the cellulose component weight. In another embodiment, the water soluble polymer is 7% to 12% of the cellulose component weight. In another embodiment, the water soluble polymer is 8% to 11% of the cellulose component weight.

In an embodiment, the pre-aerogel composition further comprises a water soluble binder. Examples of the water soluble binder are as mentioned above. In another embodiment, the water soluble binder is polyvinyl alcohol. In another embodiment, the water soluble binder is polyvinyl pyrrolidone.

In an embodiment, the pre-aerogel composition further comprises a silica component derived from a plant based silicate material. Examples of the silica component are as mentioned above. In another embodiment, the silica component further modifies the cellulose component. In another embodiment, the silica component is maintained in a silicate form. In another embodiment, the silica component is converted from the silicate form to a silica form. In another embodiment, the pre-aerogel composition further comprises a silica component derived from rice husk ash. In another embodiment, the silica component is attached to the cellulose component. In another embodiment, the silica component is adhered on the cellulose component. In another embodiment, the silica component is grown on the cellulose component.

Accordingly, the present disclosure discloses an organic - inorganic aerogel composite fabricated by the method as herein described. The method comprises:
a) providing a cellulose component, derived from a plant based material, dispersed in an aqueous medium;
b) adding a water soluble binder and a water soluble polymer to the aqueous medium to form a first mixture;
c) forming a silica component, which is derived from a plant based silicate material, *in situ* when contacted with the first mixture for a predetermined time and condition to form a second mixture;
d) gelling the second mixture; and
e) drying the second mixture to form an organic - inorganic aerogel composite.

The organic - inorganic aerogel composite may be suitable for use as a light weight material. For example, the organic - inorganic aerogel composite may be used in construction as a panelling material. In an embodiment, the organic - inorganic aerogel composite has a density is 0.01 g/cm³ to 0.80 g/cm³. In another embodiment, the organic - inorganic aerogel composite has a density is 0.01 g/cm³ to 0.70 g/cm³. In another embodiment, the organic - inorganic aerogel composite has a density is 0.01 g/cm³ to 0.60 g/cm³. In another embodiment, the organic - inorganic aerogel composite has a density is 0.01 g/cm³ to 0.50 g/cm³. In another embodiment, the organic - inorganic aerogel composite has a density is 0.01 g/cm³ to 0.40 g/cm³. In another embodiment, the organic - inorganic aerogel composite has a density is 0.01 g/cm³ to 0.30 g/cm³. In another embodiment, the organic - inorganic aerogel composite has a density is 0.01 g/cm³ to 0.20 g/cm³. In another embodiment, the organic - inorganic aerogel composite has a density is 0.01 g/cm³ to 0.10 g/cm³.

The organic - inorganic aerogel composite may be suitable for use as an acoustic insulator. In an embodiment, the organic - inorganic aerogel composite has an acoustic absorption coefficient of 0.1 to 1.0. In another embodiment, the organic - inorganic aerogel composite has an acoustic absorption coefficient of 0.15 to 0.95. In another embodiment, the organic - inorganic aerogel composite has an acoustic absorption coefficient of 0.2 to 0.9. In another embodiment, the organic - inorganic aerogel composite has an acoustic absorption coefficient of 0.2 to 0.85. In another embodiment, the organic - inorganic aerogel composite has an acoustic absorption coefficient of 0.2 to 0.8. In another embodiment, the organic - inorganic aerogel composite has an acoustic absorption coefficient of 0.25 to 0.75. In another embodiment, the organic - inorganic aerogel composite has an acoustic absorption coefficient of 0.3 to 0.7. In another embodiment, the organic - inorganic aerogel composite has an acoustic absorption coefficient of 0.3 to 0.6.

In certain embodiments, the present disclosure discloses an organic - inorganic aerogel composite which is suitable for use as an oil absorption material. In particular, it was found that the organic - inorganic aerogel composite may be advantageously used for oil absorption. Without wanting to be bound to theory, it is believed that many cellulose aerogels have a hydrophilic matrix and hence does not favourable absorb oil, which is hydrophobic. Many silica aerogels, on the other hand, are not efficient oil absorbing materials as their open pore matrix is limited. The combination of cellulose and silica in organic - inorganic aerogel composite acts to provide a hydrophobic matrix with a favourable open pore structure that can advantageously hold a large amount of oil. Further, these organic - inorganic aerogel composites mainly comprises of air, i.e. up to 99%. Accordingly, there is little material actually used in these cleaning operations and the contribution to waste if minimized. Additionally, the present disclosure teaches an organic - inorganic aerogel composite made from agricultural products, such as waste materials. Accordingly, there is an added element of environmental friendliness as recyclable materials are re-used in green applications. It was found that the organic - inorganic aerogel composite is suitable for use in absorbing oils of various viscosities. In particular, a higher absorption can be obtained with lower viscosity oils. In an embodiment, the organic - inorganic aerogel composite is suitable for use in absorbing medium crude oil. In another embodiment, the organic - inorganic aerogel composite is suitable for use in absorbing mixtures comprising crude oil. In another embodiment, the organic - inorganic aerogel composite is suitable for use in absorbing palm olein oil. In another embodiment, the organic - inorganic aerogel composite is suitable for use in absorbing mixtures comprising palm olein oil.

In an embodiment, the organic - inorganic aerogel composite has an oil absorption capacity of 10 g/g to 60 g/g. In another embodiment, the organic - inorganic aerogel composite has an oil absorption capacity of 15 g/g to 60 g/g. In another embodiment, the organic - inorganic aerogel composite has an oil absorption capacity of 20 g/g to 60 g/g. In another embodiment, the organic - inorganic aerogel composite has an oil absorption capacity of 25 g/g to 60 g/g. In another embodiment, the organic - inorganic aerogel composite has an oil absorption capacity of 30 g/g to 60 g/g. In another embodiment, the organic - inorganic aerogel composite has an oil absorption capacity of 35 g/g to 60 g/g. In another embodiment, the organic - inorganic aerogel composite has an oil absorption capacity of 40 g/g to 60 g/g. In another embodiment, the organic - inorganic aerogel composite has an oil absorption capacity of 40 g/g to 55 g/g. In another embodiment, the organic - inorganic aerogel composite has an oil absorption capacity of 45 g/g to 55 g/g.

Advantageously, the organic-inorganic aerogel preferentially absorbs oil. In certain embodiments, the organic-inorganic aerogel has an aqueous absorption capacity of 0.1 g/g to 2.0 g/g. In other embodiments, the aqueous absorption capacity is of 0.2 g/g to 1.9 g/g. In other embodiments, the aqueous absorption capacity is of 0.3 g/g to 1.8 g/g. In other embodiments, the aqueous absorption capacity is of 0.4 g/g to 1.7 g/g. In other embodiments, the aqueous absorption capacity is of 0.5 g/g to 1.6 g/g. In other embodiments, the aqueous absorption capacity is of 0.6 g/g to 1.5 g/g. In other embodiments, the aqueous absorption capacity is of 0.6 g/g to 1.4 g/g. In other embodiments, the aqueous absorption capacity is of 0.6 g/g to 1.3 g/g. In other embodiments, the aqueous absorption capacity is of 0.6 g/g to 1.2 g/g. In other embodiments, the aqueous absorption capacity is of 0.6 g/g to 1.1 g/g. In other embodiments, the aqueous absorption capacity is of 0.6 g/g to 1.0 g/g.

Accordingly, in certain embodiments, the present disclosure also discloses a method of absorbing oil using an organic - inorganic aerogel composite, comprising:
a) providing an oil;
b) providing an organic - inorganic aerogel composite as disclosed herein; and
c) contacting the organic - inorganic aerogel composite with the oil.

The organic - inorganic aerogel composite may be suitable for use as a thermal insulating material. In an embodiment, the organic - inorganic aerogel composite has a thermal conductivity of 0.010 W/m K to 0.080 W/m·K. In another embodiment, the organic - inorganic aerogel composite has a thermal conductivity of 0.015 W/m K to 0.075 W/m·K. In another embodiment, the organic - inorganic aerogel composite has a thermal conductivity of 0.020 W/m K to 0.070 W/m K. In another embodiment, the organic - inorganic aerogel composite has a thermal conductivity of 0.020 W/m K to 0.065 W/m K. In another embodiment, the organic - inorganic aerogel composite has a thermal conductivity of 0.020 W/m K to 0.060 W/m K. In another embodiment, the organic - inorganic aerogel composite has a thermal conductivity of 0.020 W/m K to 0.055 W/m K. In another embodiment, the organic - inorganic aerogel composite has a thermal conductivity of 0.020 W/m K to 0.050 W/m K. In another embodiment, the organic - inorganic aerogel composite has a thermal conductivity of 0.025 W/m K to 0.050 W/m K. In another embodiment, the organic - inorganic aerogel composite has a thermal conductivity of 0.030 W/m K to 0.050 W/m K.

In an embodiment, the organic - inorganic aerogel composite has a flexural strength of 1,000 N/m² to 22,000 N/m². In another embodiment, the flexural strength is of 1,500 N/m² to 20,000 N/m². In another embodiment, the flexural strength is of 2,000 N/m² to 18,000 N/m². In another embodiment, the flexural strength is of 2,500 N/m² to 16,000 N/m². In another embodiment, the flexural strength is of 3,000 N/m² to 14,000 N/m². In another embodiment, the flexural strength is of 3,500 N/m² to 12,000 N/m². In another embodiment, the flexural strength is of 4,000 N/m² to 10,000 N/m². In another embodiment, the flexural strength is of 4,500 N/m² to 9,000 N/m². In another embodiment, the flexural strength is of 5,000 N/m² to 8,000 N/m².

In an embodiment, the organic - inorganic aerogel composite has a modulus of 0.02 MPa to 1.0 MPa at break. In another embodiment, the modulus is of 0.03 MPa to 0.95 MPa. In another embodiment, the modulus is of 0.04 MPa to 0.90 MPa. In another embodiment, the modulus is of 0.05 MPa to 0.85 MPa. In another embodiment, the modulus is of 0.06 MPa to 0.80 MPa. In another embodiment, the modulus is of 0.07 MPa to 0.75 MPa. In another embodiment, the modulus is of 0.08 MPa to 0.70 MPa. In another embodiment, the modulus is of 0.08 MPa to 0.65 MPa. In another embodiment, the modulus is of 0.08 MPa to 0.60 MPa. In another embodiment, the modulus is of 0.08 MPa to 0.55 MPa. In another embodiment, the modulus is of 0.08 MPa to 0.50 MPa. In another embodiment, the modulus is of 0.08 MPa to 0.45 MPa. In another embodiment, the modulus is of 0.08 MPa to 0.40 MPa.

The present disclosure also discloses an organic - inorganic aerogel composite comprising:
a) a cellulose component derived from a plant based material;
b) a silica component derived from a plant based silicate material;
c) a water soluble binder; and
d) a water soluble polymer for modifying the surface of the cellulose component.

The skilled person would understand that the water soluble binder acts to prevent the cellulose component and silica component from phase separating. Further, the addition of the water soluble polymer unexpectedly provides for an organic - inorganic aerogel composite with a homogeneous cross-sectional distribution. Accordingly, in an embodiment, the silica component is attached to the cellulose component. In another embodiment, the silica component is adhered on the cellulose component. In another embodiment, the silica component is grown on the cellulose component.

In an embodiment, the organic - inorganic aerogel composite further comprises impurities. In another embodiment, the organic - inorganic aerogel composite further comprises plant based impurities. In another embodiment, the plant based impurities is selected from the group comprising of hemicellulose, pectin and lignin. In another embodiment, the plant based impurity is hemicellulose. In another embodiment, the plant based impurity is pectin. In another embodiment, the plant based impurity is lignin.

The disclosure also includes all of the steps, features, compositions and compounds referred to or indicated in this specification, individually or collectively, and any and all combinations of any two or more of said steps or features.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integers or steps.

The reference to any prior art in this specification is not, and should not be taken as, an acknowledgment or any form of suggestion that the prior art forms part of the common general knowledge.

### Examples

### Comparative Example 1A (Rice husk ash aerogel)

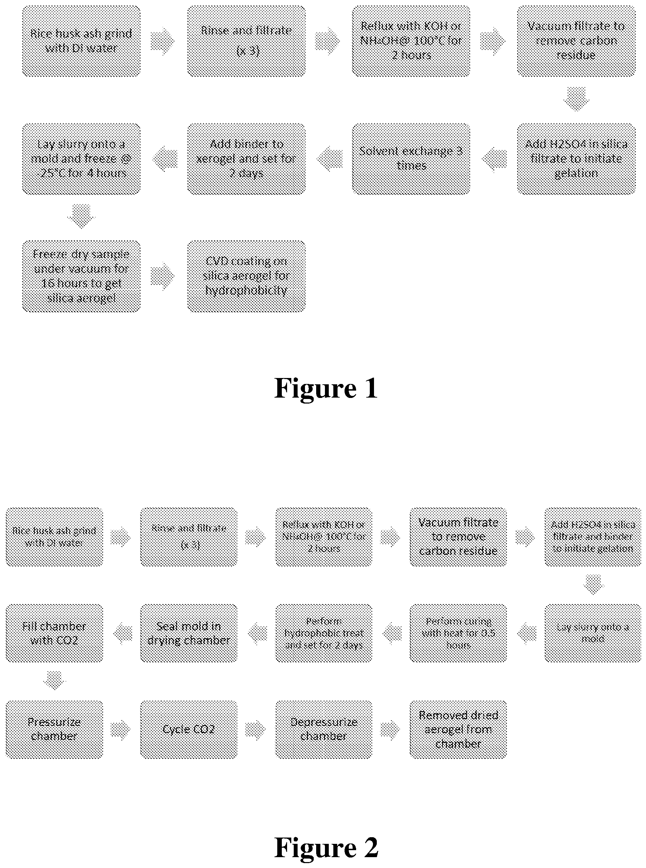

The synthetic methodology is as shown in Figure 1. Briefly, rice husk ash was grounded with DI water. The grounded rice husk ash was rinsed and filtered for at least 3 times, and the resultant powder was refluxed with KOH or NH₄OH at 100 °C for 2 hr. The mixture was then vacuum filtered to remove carbon residues and H₂SO₄ added to the silicate filtrate to initiate gelation. Solvent exchange was performed at least 3 times and a binder is added to the xerogel and allowed to set for at least 2 days. The slurry was then laid onto a mold and freezed at -25 °C for 4 hr. The frozen sample was then freeze dried under vacuum for at least 16 hr to obtain a silica aerogel. Further coating may be performed by CVD to impart hydrophobicity to the silica aerogel.

### Comparative Example 1B (Rice husk ash aerogel)

The synthetic methodology is as shown in Figure 2. Briefly, rice husk ash was grounded with DI water. The grounded rice husk ash was rinsed and filtered for at least 3 times, and the resultant powder was refluxed with KOH or NH₄OH at 100°C for 2 hr. The mixture was then vacuum filtered to remove carbon residues and H₂SO₄ added to the silicate filtrate to initiate gelation. The slurry was then laid into a mold and cured with heat for at least 0.5 h. The cured slurry is hydrophobically treated and allowed to set for 2 days. Supercritical drying using CO₂ is then performed on the sample to obtain the aerogel.

### Comparative Example 2A (Rice straw aerogel)

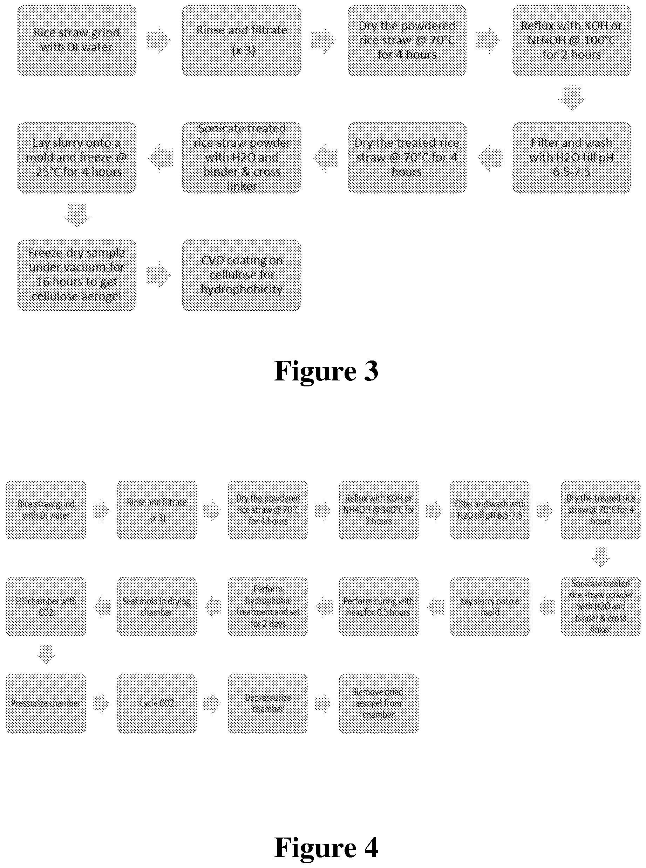

The synthetic methodology is as shown in Figure 3. Briefly, rice straw was grounded with DI water. The grounded rice straw was rinsed and filtered for at least 3 times, and the resultant powdered rice straw dried at 70 °C for 4 hr. The powder was refluxed with KOH or NH₄OH at 100 °C for 2 hr. The mixture was then filtered and washed with water until the pH of the filtrate was in the range of 6.5-7.5. The treated rice straw was then dried at 70 °C for 4 hrs. The treated rice straw was sonicated in water and binder. A water soluble polymer may be added at this point. The slurry was then laid onto a mold and freeze at -25 °C for 4 hr. The frozen sample was then freeze dried under vacuum for at least 16 hr to obtain a cellulose aerogel. Further coating may be performed by CVD to impart a hydrophobicity to the cellulose aerogel.

### Comparative Example 2B (Rice straw aerogel)

The synthetic methodology is as shown in Figure 4. Briefly, rice straw was grounded with DI water. The grounded rice straw was rinsed and filtered for at least 3 times, and the resultant powdered rice straw dried at 70 °C for 4 hr. The powder was refluxed with KOH or NH₄OH at 100°C for 2 hr.

The mixture was then filtered and washed with water until the pH of the filtrate was in the range of 6.5-7.5. The treated rice straw was then dried at 70 °C for 4 hrs. The treated rice straw was sonicated in water and binder. A water soluble polymer may be added at this point. The slurry was then laid into a mold and cured with heat for at least 0.5 h. The cured slurry is hydrophobically treated and allowed to set for 2 days. Supercritical drying using CO₂ is then performed on the sample to obtain the aerogel.

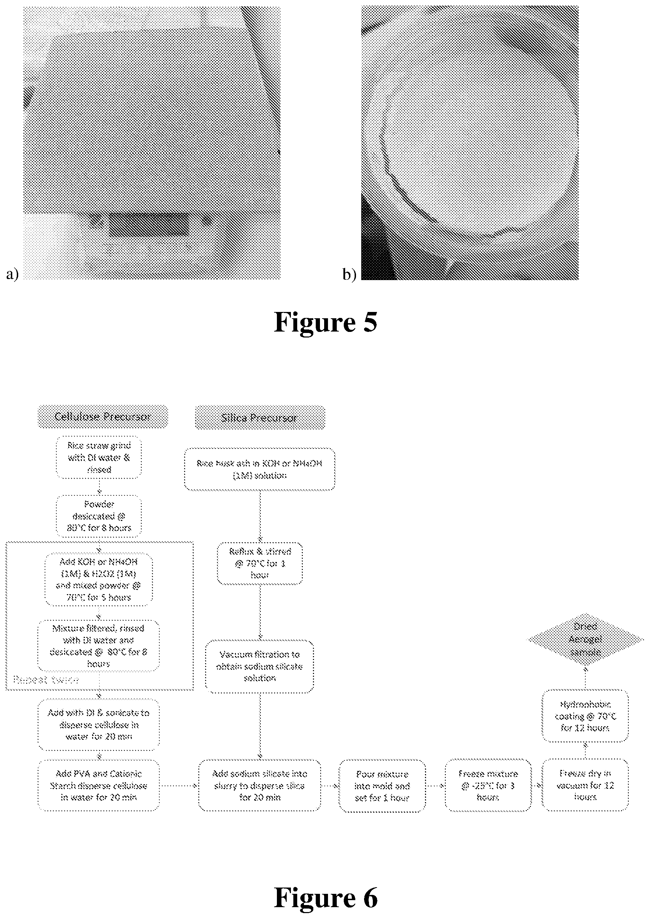

For comparative examples 1 and 2, large composite panels of 300 x 300 mm are fabricated. The formulation can be replicated for a maximum of 1500 x 700 mm panels. Figure 5 shows the final form of rice straw and rice husk ash aerogels. The oil absorption was determined to be of less than 30 g/g and 15 g/g respectively.

### Example 1 (organic-inorganic aerogel composite)

### Materials

Rice straw is cleaned with DI water, dried at 80 °C for overnight, cut and ground into powder. 30 g of the powder is mixed with 250 ml of 1M NaOH solution at 70 °C for 5h. The solid is filtered, washed with DI water and dried at 80 °C for overnight. The dried solid is then mixed with a mixture of 250 ml of 1M NaOH + 1M H₂O₂ at 70°C for 5h. The solid is filtered, washed with DI water and dried at 80°C for overnight. 30 g of rice husk ash is dispersed in 250 ml of 1M NaOH solution and stirred for 1h at 70 °C. The mixture is then filtered to obtain the sodium silicate solution.

### Synthesis step

3 g of pretreated rice straw powder is dispersed in 100ml of DI water using a probe sonicator for 20 min. Then 0.3 g of polyvinyl alcohol/cationic starch and 30 ml of sodium silicate solution are added into the suspension. The mixture is sonicated for 20 min to form a gel. The gel is then frozen in a freezer for 12h and dried with a freeze dryer for 24h to obtain the composite aerogel. The synthetic procedure is illustrated in Figure 6.

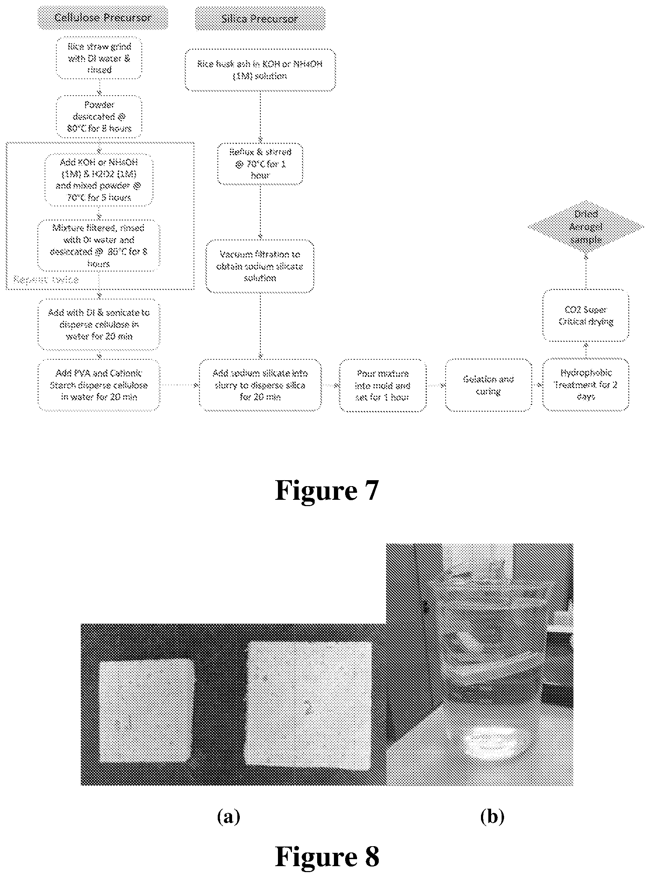

Alternatively, supercritical drying can be used to obtain the organic-inorganic aerogel composite. The procedure is as mentioned above and is illustrated in Figure 7.

### Hydrophobic coating

The composite aerogel samples are placed in a closed box with an open vial containing. methyltrimethoxysilane. The coating is performed at 70 °C for 3h.

### Results

Density: The aerogel based composite panels were removed after curing at room temperature at the relatively humidity of 60% and weighed. The densities of the various types of composite blocks were determined from the known dimensions of those panels. The density was determined to be of 0.030-0.050 g/cm³.

Thermal Conductivity: Thermal conductivity was measured using Heat Flow Meter FOX314. Samples sizes of 300mm x 300mm with a maximum thickness of 20mm were tested. The FOX 314 Heat Flow Meter is an accurate, easy-to-use instrument for measuring thermal conductivity according to ASTM C518 and ISO 8301. Operating in standalone or PC-controlled configurations, the FOX Heat Flow Meter provides rapid, accurate results. The instrument features proprietary thin film heat flux transducers, digital thickness measurements and responsive temperature control. The FOX 314 is a versatile instrument and is especially well-suited to measuring slices of cellular plastics.

Samples are placed between two plates in the test stack and a temperature gradient is established over the thickness of the material. The plates may be positioned either to a user-defined thickness, or using Auto Thickness, in which the instrument automatically moves to establish contact with the sample. In-situ sample thickness is measured with four optical encoders, one at each corner of the plate, providing stable measurements to within 0.025 mm.

The thermal conductivity was determined to be in the range of 0.020-0.050 W/m K.

Hydrophobic Quality: Sample size of 80 x80 mm and 100 x 100 mm were prepared and tested for water sorption as per ASTM C1511. Hydrophobic quality of the composition was evaluated based on water uptake into the specimen for 15 minutes as shown in Figure 8. The ratio of difference between wet and dry mass to the dry mass were recorded and calculated.

The hydrophobic quality was determined to be in the range of 0.6 g/g to 1.0 g/g.

Acoustic Insulation Measurement: SW series Impedance Tubes can accurately measure sound absorption coefficients and impedance according to standards described in ISO10534-2 (1998). They are based on the Transfer Function Method, which is much faster than the commonly used Standing Wave Ratio Method. The SW series Impedance Tubes are specially designed not only to work with the cut samples, but also for direct use in the field. The small size and durable aluminium construction make it easy to transport and be used for estimating the properties of walls, ceilings, installed building materials, road surfaces, different ground surfaces, interiors of vehicles, etc. BSWA offers the complete set of Impedance Tube system, which includes: the tubes, microphones; DAQ hardware and measurement software.

The acoustic absorption coefficient was determined to be in the range of 0.75 to 0.9.

Oil Absorption: Panels of size 13.5 × 13.5 cm² of 2.5 cm minimum thickness are tested as per ASTM F726. Panels are placed in an oven and dried at 60 °C with dessicator. The dried panels are weighed to record dry weight. A suitable tank containing medium oil with a viscosity of 200 to 400 cPs and a density of 0.88 to 0.97 g/cm³ is filled to a height of 5 cm. Examples of medium oil are crude oil, mineral oils and canola oil. The sample is placed into the tank. The panel shall be allowed to float freely within the test cell. After 15 minutes, remove the panel in a vertical orientation along an edge with a clip and let drain for 30 s. Place a tared weighing pan under the adsorbent to catch any additional drips and immediately transfer the panel to the pan. Determine and record the sample weight. All tests are triplicated with the mean of the three runs being used for calculations. The oil pick-up ratio on a weight basis is calculated, as is the volume of oil. If the value of any run (g/g) deviates by more than 15 % from the mean of the three runs, then the samples will be rejected and the test repeated with three new specimens.

Organic - inorganic aerogel composites were determined to have a high oil adsorption capacity in the range of 40 - 55 g/g.

Flexural Strength Test: Each sample was cut into a rectangular specimen of x-y dimensions of 150 x 40 mm with 20 mm height (in z-direction. The specimens were placed in a 3-point bending jig tested in the z-direction at the rate of 2.0 mm/min, till crack or break. Each specimen was loaded in compression using 50kN ± 4% load cell with the pre-load of 100N. Flexural strength at break and flexural modulus at break were recorded. The composite panels are tested under compression using INSTRON 5569 load frame.

Results showed a flexural strength of at least 4000 - 10000 N/m², a modulus of 0.08 MPa to 0.50 MPa at break.

## Claims

1. A method of fabricating an organic - inorganic aerogel composite, comprising the steps of:
a) providing a cellulose component, derived from a plant based material, dispersed in an aqueous medium, wherein the plant based material is rice straw grounded into powder, which is subjected to a treatment with NaOH and H₂O₂;
b) adding a water soluble binder and a water soluble polymer to the aqueous medium to form a first mixture, wherein the water soluble polymer is a cationic starch and the water soluble binder is polyvinyl alcohol;
c) forming a silica component, which is derived from a plant based silicate material, *in situ* when contacted with the first mixture for a predetermined time and condition to form a second mixture, wherein the silica component is rice husk ash, which is subjected to a treatment with NaOH, and the predetermined time is 5 min to 60 min, and the predetermined condition is a temperature of 15 °C to 100 °C;
d) gelling the second mixture; and
e) drying the second mixture to form an organic - inorganic aerogel.

2. The method according to 1, wherein the predetermined condition is a pH of 6.5 to 7.5.

3. The method according to any of 1 or 2, wherein the cellulose component has an aspect ratio of 50 to 100.

4. The method according to any of 1 to 3, wherein forming the silica component comprises forming silica particle.

5. The method according to 4, wherein the silica particle is adhered to the cellulose component.

6. The method according to any of 1 to 5, wherein the cellulose component is 60% to 75 % of the final composite weight.

## Patentansprüche

1. Ein Verfahren zur Herstellung eines organisch-anorganischen Aerogel-Verbundstoffs, das die folgenden Schritte aufweist:
a) Bereitstellen einer Zellulosekomponente, die von einem auf Pflanzen basierten Material abgeleitet ist und in einem wässrigen Medium dispergiert ist, wobei das auf Pflanzen basierte Material zu Pulver gemahlenes Reisstroh ist, das einer Behandlung mit NaOH und H₂O₂ unterzogen wird;
b) Zugabe eines wasserlöslichen Bindemittels und eines wasserlöslichen Polymers zu dem wässrigen Medium, um eine erste Mischung zu bilden, wobei das wasserlösliche Polymer eine kationische Stärke und das wasserlösliche Bindemittel Polyvinylalkohol ist;
c) Bilden einer Siliziumdioxidkomponente, die von einem auf Pflanzen basierten Silikatmaterial abgeleitet ist, *in situ,* wenn sie mit der ersten Mischung für eine vorbestimmte Zeit und unter vorbestimmten Bedingungen in Kontakt gebracht wird, um eine zweite Mischung zu bilden, wobei die Siliziumdioxidkomponente Reishülsenasche ist, die einer Behandlung mit NaOH unterzogen wird, und die vorbestimmte Zeit 5 min bis 60 min beträgt und die vorbestimmte Bedingung eine Temperatur von 15 °C bis 100 °C ist;
d) Gelieren der zweiten Mischung; und
e) Trocknen der zweiten Mischung zur Bildung eines organisch-anorganischen Aerogels.

2. Das Verfahren nach 1, wobei die vorbestimmte Bedingung ein pH-Wert von 6,5 bis 7,5 ist.

3. Das Verfahren nach einem von 1 oder 2, wobei die Zellulosekomponente ein Seitenverhältnis von 50 bis 100 aufweist.

4. Das Verfahren nach einem von 1 bis 3, wobei die Bildung der Siliziumdioxidkomponente die Bildung von Siliziumdioxid-Teilchen aufweist.

5. Das Verfahren nach 4, wobei das Siliziumdioxid-Teilchen an der Zellulosekomponente haftet.

6. Das Verfahren nach einem von 1 bis 5, wobei die Zellulosekomponente 60 % bis 75 % des endgültigen Verbundgewichts ausmacht.

## Revendications

1. Procédé de fabrication d'un composite aérogel organique-inorganique, comprenant les étapes suivantes :
a) fournir un composant de cellulose, dérivé d'une matière d'origine végétale, dispersé dans un milieu aqueux, dans lequel la matière d'origine végétale est de la paille de riz moulue en poudre, qui est soumise à un traitement avec NaOH et H₂O₂ ;
b) ajouter un liant soluble dans l'eau et un polymère soluble dans l'eau au milieu aqueux pour former un premier mélange, le polymère soluble dans l'eau étant un amidon cationique et le liant soluble dans l'eau étant de l'alcool polyvinylique ;
c) former un composant de silice, dérivé d'une matière silicatée d'origine végétale, *in situ,* lorsqu'il est mis en contact avec le premier mélange pendant une durée et dans une condition prédéterminées pour former un deuxième mélange, dans lequel le composant de silice est de la cendre de balle de riz, qui est soumise à un traitement avec NaOH, et la durée prédéterminée est de 5 minutes à 60 minutes, et la condition prédéterminée est une température de 15°C à 100°C ;
d) gélifier le deuxième mélange ; et
e) sécher le deuxième mélange pour former un aérogel organique-inorganique.

2. Procédé selon 1, dans lequel la condition prédéterminée est un pH de 6,5 à 7,5.

3. Procédé selon 1 ou 2, dans lequel le composant de cellulose a un rapport d'aspect de 50 à 100.

4. Procédé selon l'un quelconque de 1 à 3, dans lequel la formation du composant de silice comprend la formation d'une particule de silice.

5. Procédé selon 4, dans lequel la particule de silice est adhérée au composant de cellulose.

6. Procédé selon l'un quelconque de 1 à 5, dans lequel le composant de cellulose est de 60 % à 75 % du poids de composite final.
